(19) Europäisches Patentamt
European Patent Office
Office européen des brevets

(11) **EP 4 622 192 A1**

(12) **EUROPEAN PATENT APPLICATION**
published in accordance with Art. 153(4) EPC

(43) Date of publication:
**24.09.2025   Bulletin 2025/39**

(21) Application number: **22965494.2**

(22) Date of filing: **16.11.2022**

(51) International Patent Classification (IPC):
***H04L 27/00*** *(2006.01)*

(52) Cooperative Patent Classification (CPC):
**H04L 27/00**

(86) International application number:
**PCT/CN2022/132346**

(87) International publication number:
**WO 2024/103310 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CAO, Jianfei**
  **Dongguan, Guangdong 523860 (CN)**
• **YOU, Xin**
  **Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **WIRELESS COMMUNICATION METHOD, TERMINAL DEVICE, AND NETWORK DEVICE**

(57)   A wireless communication method, a terminal device, and a network device. The method comprises: a terminal device receives first signaling sent by a first network device, the first signaling being used for instructing the terminal device to initiate a random access process to a target network device, wherein the first signaling comprises first indication information, and the first indication information is used for indicating the target network device; the terminal device sends a physical random access channel (PRACH) to the target network device; the terminal device receives a random access response (RAR), the RAR comprising a target timing advance (TA) value, and the target TA value being a TA value of the terminal device for the target network device.

Terminal device

First network device

S210, first signaling, wherein the first signaling includes first indication information, and is used for instructing a target network device

S220, transmitting a PRACH to the target network device

S230, receiving a target TA value

FIG. 8

EP 4 622 192 A1

## Description

## TECHNICAL FIELD

Embodiments of the present disclosure relate to the field of communications, and in particular, relate to a wireless communication method, a terminal device, and a network device.

## RELATED ART

In some scenarios, a terminal device acquires an initial timing advance (TA) by a random access procedure, and transmits an uplink channel or an uplink signal based on the initial TA.

Multi-transmission reception point (m-TRP)-based uplink transmission is introduced in some scenarios. In this case, how does the terminal device acquire a suitable TA for the m-TRP-based uplink transmission is an urgent problem to be solved.

## SUMMARY

Embodiments of the present disclosure provide a wireless communication method, a terminal device, and a network device, which facilitate selection of a suitable TA by the terminal device.

In a first aspect of the embodiments of the present disclosure, a wireless communication method is provided. The method is applicable to a terminal device, and includes: receiving first signaling from a first network device, wherein the first signaling is used for instructing the terminal device to initiate a random access to a target network device, and includes first indication information, wherein the first indication information indicates the target network device; transmitting a physical random access channel (PRACH) to the target network device; and receiving a random access response (RAR), wherein the RAR includes a target TA value, wherein the target TA value is a TA value of the terminal device to the target network device.

In a second aspect of the embodiments of the present disclosure, a wireless communication method is provided. The method is applicable to a network device, and includes: transmitting first signaling to a terminal device, wherein the first signaling is used for instructing the terminal device to initiate a random access to a target network device, and includes first indication information, wherein the first indication information indicates the target network device.

In a third aspect of the embodiments of the present disclosure, a terminal device is provided. The terminal device is applicable to implementing the method in the first aspect or embodiments thereof.

Specifically, the terminal device includes functional modules for performing the method in the first aspect or embodiments thereof.

In a fourth aspect of the embodiments of the present disclosure, a network device is provided. The network device is applicable to implementing the method in the second aspect or embodiments thereof.

Specifically, the network device includes functional modules for performing the method in the second aspect or embodiments thereof.

In a fifth aspect of the embodiments of the present disclosure, a terminal device is provided. The terminal device includes a processor and a memory storing one or more computer programs, wherein the processor is configured to call and run the one or more computer programs in the memory to perform the method in the first aspect or embodiments thereof.

In a sixth aspect of the embodiments of the present disclosure, a network device is provided. The network device includes a processor and a memory storing one or more computer programs; wherein the processor is configured to call and run the one or more computer programs in the memory to perform the method in the second aspect or embodiments thereof.

In a seventh aspect of the embodiments of the present disclosure, a chip is provided. The chip is applicable to implementing the method in the first aspect to the second aspect or embodiments thereof.

Specifically, the chip includes a processor, wherein the processor is configured to call and run one or more computer programs in a memory to cause a device equipped with the chip to perform the method in the first aspect to the second aspect or embodiments thereof.

In an eighth aspect of the embodiments of the present disclosure, a computer-readable storage medium is provided. The computer-readable storage medium stores one or more computer programs, wherein the one or more computer programs, when loaded and run on a computer, cause the computer to perform the method in the first aspect to the second aspect or embodiments thereof.

In a ninth aspect of the embodiments of the present disclosure, a computer program product is provided. The computer program product includes one or more computer program instructions, wherein the one or more computer program instructions, when loaded and executed on a computer, cause the computer to perform the method in the first aspect to the second aspect or embodiments thereof.

In a tenth aspect of the embodiments of the present disclosure, a computer program is provided. The computer program, when loaded and run on a computer, causes the computer to perform the method in the first aspect to the second aspect or embodiments thereof.

Based on above technical solutions, the first network device triggers, based on the first signaling, the terminal device to initiate the random access to the target network device. Then, the terminal device transmits the PRACH to the target network device, receives the RAR, and acquires the TA value of the terminal device for the target network device from the RAR. Thus, in the embodiments of the present disclosure, the first signaling is set, such that the terminal device initiates the random access to a specific network device, and thus acquires the TA of the terminal device for the specific network device. That is, the TA of the specific network device is acquired, and the terminal device acquires the suitable TA. For example, in the m-TRP-based uplink transmission, as distances between a plurality of TRPs and the terminal device are different, and a uniform TA may cause a large uplink synchronization error, the TRP uplink synchronized with the terminal device may trigger the terminal device to initiate the random access to another TRP to acquire the TA value of the terminal device for the another TRP. In the uplink transmission, the terminal device initiates the uplink transmission to each TRP using a TA value corresponding to the TRP to ensure uplink synchronization between the terminal device and each TRP.

## BRIEF DESCRIPTION OF DRAWINGS

FIG. 1 is a schematic diagram of an architecture of a communication system according to some embodiments of the present disclosure;

FIG. 2 is a schematic diagram of a format of a medium access control (MAC) control element (CE) for differential adjustment of a TA;

FIG. 3 is a schematic diagram of a format of a MAC CE for indicating an absolute value of TA;

FIG. 4 is a schematic diagram of a format of MAC CE signaling for carrying a TA;

FIG. 5 is a schematic diagram of a TA of downlink receipt and uplink transmission;

FIG. 6 is a scenario diagram of m-TRP-based uplink transmission scheduled by a plurality pieces of downlink control information;

FIG. 7 is a schematic diagram of a four-step random access process;

FIG. 8 is a schematic interaction diagram of a wireless communication method according to some embodiments of the present disclosure;

FIG. 9 is a schematic interaction diagram of a wireless communication method according to some embodiments of the present disclosure;

FIG. 10 is a schematic interaction diagram of a wireless communication method according to some embodiments of the present disclosure;

FIG. 11 is a schematic interaction diagram of a wireless communication method according to some embodiments of the present disclosure;

FIG. 12 is a schematic interaction diagram of a wireless communication method according to some embodiments of the present disclosure;

FIG. 13 is a schematic interaction diagram of a wireless communication method according to some embodiments of the present disclosure;

FIG. 14 is a schematic interaction diagram of a wireless communication method according to some embodiments of the present disclosure;

FIG. 15 is a schematic interaction diagram of a wireless communication method according to some embodiments of the present disclosure;

FIG. 16 is a schematic interaction diagram of a wireless communication method according to some embodiments of the present disclosure;

FIG. 17 is a schematic interaction diagram of a wireless communication method according to some embodiments of the present disclosure;

FIG. 18 is a schematic interaction diagram of a wireless communication method according to some embodiments of the present disclosure;

FIG. 19 is a schematic interaction diagram of a wireless communication method according to some embodiments of the present disclosure;

FIG. 20 is a schematic interaction diagram of a wireless communication method according to some embodiments of the present disclosure;

FIG. 21 is a schematic block diagram of a terminal device according to some embodiments of the present disclosure;

FIG. 22 is a schematic block diagram of a network device according to some embodiments of the present disclosure;

FIG. 23 is a schematic block diagram of a network device according to some embodiments of the present disclosure;

FIG. 24 is a schematic block diagram of a terminal device according to some embodiments of the present disclosure;

FIG. 25 is a schematic block diagram of a network device according to some embodiments of the present disclosure,

FIG. 26 is a schematic block diagram of a communication device according to some embodiments of the present disclosure,

FIG. 27 is a schematic block diagram of a chip according to some embodiments of the present disclosure; and

FIG. 28 is a schematic block diagram of a communication system according to some embodiments of the present disclosure.

## DETAILED DESCRIPTION

The technical solutions according to the embodiments of the present disclosure are described hereinafter in combination with the accompanying drawings for the embodiments of the present disclosure. It is obvious that the described embodiments are merely part but not all of the embodiments of the present disclosure. All other embodiments derived by persons of ordinary skill in the art without creative efforts based on the embodiments in the present disclosure are within the protection scope of the disclosure.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, an universal mobile telecommunication system (UMTS), a wireless local area network (WLAN), a wireless fidelity (Wi-Fi), a 5th generation (5G) communication system, or other communication systems.

In general, communications supported by the traditional communication system are limited and are easy to implement. However, with the development of the communication technologies, the mobile communication system supports traditional communications, and also supports, for example, device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, or a standalone (SA) scenario.

In some embodiments, the communication systems according to the embodiments of the present disclosure are also applicable to an unlicensed spectrum. The unlicensed spectrum is also a shared spectrum. Alternatively, the communication systems according to the embodiments of the present disclosure are also applicable to a licensed spectrum. The licensed spectrum is also a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (STA) in the WLAN, for example, a cellular phone, a cordless phone, a Session Initiation Protocol (SIP) phone, a wireless local loop (WLL) ST, a personal digital assistant (PDA) device, a handheld device with a wireless communication capability, a computing device or other processing devices connected to a wireless modem, an in-vehicle device, a wearable device, a next generation communication system, such as a terminal device in the NR network, or a terminal device in an evolved public land mobile network (PLMN) network.

In the embodiments of the present disclosure, the terminal device is deployed on land (for example, indoors or outdoors, or handheld, wearable, or vehicle-mounted deployment); or the terminal device may be deployed on water (for example, on a ship); or the terminal device may be deployed in air (for example, on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

As examples instead of limitations, in the embodiments of the present disclosure, the terminal device may be a wearable device. The wearable device may also be referred to as a wearable smart device, and is a generic name for wearable devices such as glasses, gloves, watches, clothes, and shoes that are developed by applying wearable technologies for smart designs of daily wear. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a device with full functionality and a large size that is capable of implementing all or part of functions without relying on a smart phone, for example, a smart watch or smart glasses; and includes a device that specializes in specific application functions and needs to be used with another device such as a smart phone, for example, various smart bracelets or smart jewelry for vital sign monitoring.

In the embodiments of the present disclosure, the network device is a device for communicating with the mobile device, and the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, a network device in an NR network (gNB) or in a future evolutional PLMN network or an NTN network.

As examples instead of limitations, the terminal device has mobility in the embodiments of the present disclosure. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (such as frequency field resources, or spectrum resources) used in the cells. The cell is a cell corresponding to the network device (such as the NB), and the cell belongs to a macro NB or a NB corresponding to a small cell. The small cell includes a metro cell, a micro cell, a pico cell, a femto cell, or the like. The small cells have the small coverage and low transmission power, and are suitable for providing high-speed data transmission services.

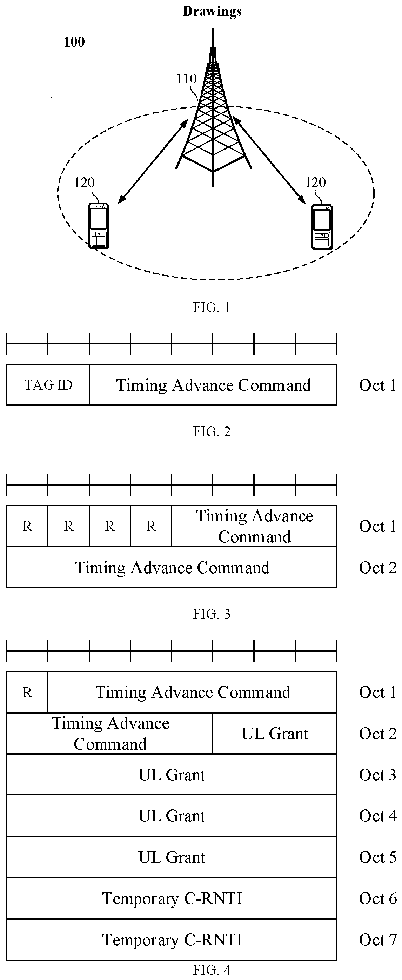

Illustratively, the communication system 100 in the embodiments of the present disclosure is shown in FIG. 1. The communication system 100 includes a network device 110, and the network device 110 is a device that is capable of communicating with a terminal device 120 (also referred to as a communication terminal or a terminal). The network device 110 provides communication coverage for a specific geographical area, and that is capable of communicating with the terminal device in the coverage area.

FIG. 1 illustrates one network device and two terminal devices. In some embodiments, the communication system 100 includes a plurality of network devices, and another quantity of terminal devices are included within a coverage range of each of the network devices, which is not limited in the embodiments of the present disclosure.

In some embodiments, the communication system 100 further includes another network entity such as a network controller, a mobile management entity, or the like, which is not limited in the embodiments of the present disclosure.

It should be understood that devices with the communication function in the network/system in the embodiments of the present disclosure are referred to as the communication devices. Using the communication system 100 shown in FIG. 1 as an example, the communication device includes the network device 110 and the terminal device 120 that have the communication function, and the network device 110 and the terminal device 120 are specific devices as described above, which are not repeated herein. The communication device further includes another device in the communication system 100, for example, another network device such as a network controller, a mobile management entity, or the like, which is not limited in the embodiments of the present disclosure.

It should be understood that the terms "system" and "network" herein are interchangeably used in this document. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" mean that there is a direct correspondence relationship or indirect correspondence relationship between two objects, an association relationship between two objects, a relationship of indicating or being indicated, or a relationship of configuring and being configured.

In the embodiments of the present disclosure, the term "predefined" is achieved by pre-storing corresponding codes or forms in the device (for example, including the terminal device and the network device) or other means for indicating relevant information, and the specific implementations are not limited in the present disclosure. For example, the predefinition is defined in the protocol.

In the embodiments of the present disclosure, the term "protocol" indicates a standard protocol in the field of communications, for example, an LTE protocol, an NR protocol, or a related protocol applied to the future communication system, which is not limited in the present disclosure.

For convenient understanding of the technical solutions according to the embodiments of the present disclosure, the TA in the present disclosure is described.

In some scenarios, in a cell group (CG), at most four timing advance groups (TAGs) are configured for a UE. The timing advance groups (TAG s) are configured by radio resource control (RRC). In some embodiments, a CG includes a plurality of serving cells, and each serving cell is assigned a TAG identifier (ID). Each TAG has a time alignment timer (TimeAlignmentTimer), and the UE performs timing of the time alignment timer. In the case that the timer expires, the UE determines that the TAG is uplink out-of-synchronization. In the case that the network device adjusts the TA value through the MAC CE or another signaling during operation of the timer, the timer is reset, and the UE determines that the TAG is in an uplink synchronization state. For example, in the case that a value of the TimeAlignmentTimer is configured to 500 ms, the network device needs to update (adjust) the TA value of the UE once within 500 ms. Otherwise, the UE determines the uplink out-of-synchronization and initiates a random access procedure when uplink data arrives.

In some scenarios, the TA of the UE is calculated using following formula, and is transmitted in advance using a first path of a downlink channel received by the UE, that is, a first symbol of a time slot of the channel, as the downlink reference:

$$(N_{TA} + N_{TA,offset}) * T_C.$$

In a CG, a TA offset is preconfigured for each serving cell, for example, by a high layer parameter (n-TimingAdvanceOffset), that is, $N_{TA,offset}$. A TA adjustment amount ($N_{TA}$) is determined based on the preconfigured TA offset. $T_C$ is a minimum time unit in an NR system, and $T_C = 1/(4096 * 480\text{kHz})$. A MAC CE of the network device provides a differential adjustment to $N_{TA}$, that is, a current (new) TA adjustment is forward or backward in time based on a previous (old) TA. The calculation formula is as follows:

$$N_{(TA_{new})} = N_{(TA_{old})} + (T_A - 31) * 16 * 64 * /2^{\mu}.$$

A format of the MAC CE for the differential adjustment of the TA is shown in FIG. 2. The adjustment of the TA is to adjust $T_A$ minimum time units based on the previous TA, and the granularity of the TA adjustment is a TAG.

In some scenarios, the network device indicates the absolute value of the TA for uplink transmission to the UE. For example, the network device directly indicates the absolute value $N_{TA}$ of the TA through a MAC CE command shown in FIG. 3, which ranges from 0 to 3846 and has a length of 12 bits. The indication range of the TA is determined based on the formula: $N_{TA} = T_A * 16 * 64 * 2^{\mu}$. In addition, the MAC CE command is suitable for a primary timing advance group (PTAG) corresponding to a corresponding MAC entity, which is defined as including a special cell (SpCell). As the MAC CE is only suitable for the PTAG, the MAC CE does not need to include a TAG ID.

n some scenarios, during the initial access (cell) procedure, after the UE transmits a PRACH to the network device, the UE expects the network device to return an indication of the TA through a MAC RAR within a time window. FIG. 4 shows a format of MAC RAR signaling carrying TA. The UE acquires an initial absolute value of the TA based on the MAC RAR, which is 12 bits.

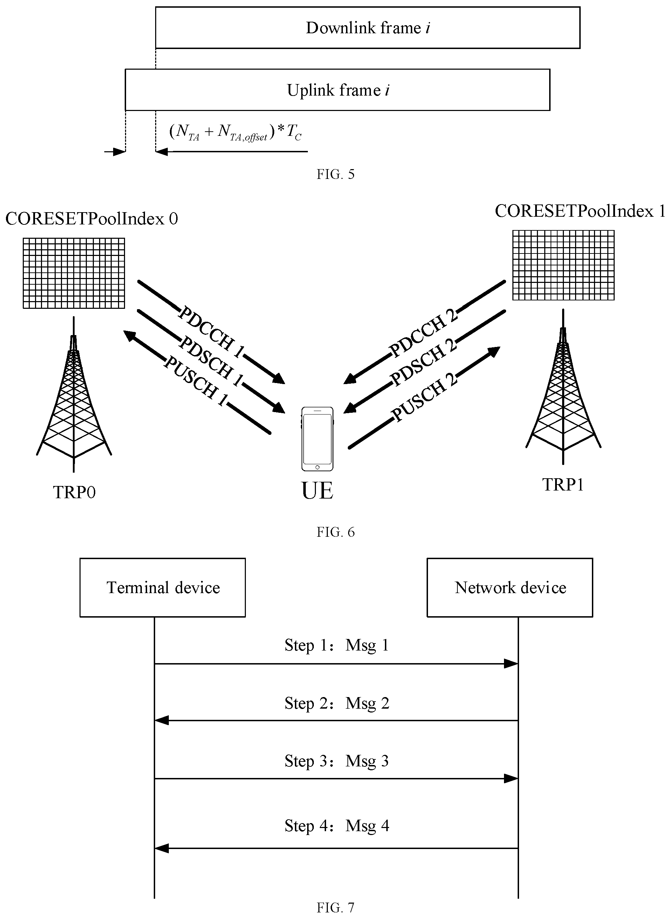

In the case that the UE operates in a single TRP (sTRP) mode, a reference point of the TA of the UE is a time point advancing by $(N_{TA} + N_{TA,offset}) * T_C$ from a downlink reception time point to transmit an uplink channel or an uplink signal, as shown in FIG. 5.

Some scenarios support repetition transmission of an m-TRP-based physical uplink control channel (PUCCH) or physical uplink shared channel (PUSCH) to enhance uplink coverage and transmission reliability. The UE needs to transmit PUCCHs or PUSCHs carrying the same content to different TRPs. For repetition transmission of single DCI (sDCI)-multi-PUSCH, the UE uses one TA to sequentially transmit the PUSCH to different TRPs. For repetition transmission of multi-DCI (mDCI)-multi-PUSCH, due to the possibility of insufficient ideal backhaul connections between a plurality of TRPs, the plurality of TRPs independently schedule the UE, which may cause temporal overlap of the PUSCH/-PUSCH for different TRPs. Therefore, different TA updates or indications are required for different TRPs.

Some scenarios support a mechanism where a plurality of antenna panels of the UE simultaneously transmit the PUCCH/PUSCH to the plurality of TRPs. However, similarly, although a plurality of uplink transmitting antenna panels and m-TRP receipt are configured, the UE is only capable of using a TA for transmission in advance within a serving cell. The limitation should be broken, that is, acquisition and indication of TA of TRP specific are supported.

For example, in an intra-cell mDCI-mTRP scenario, the TRP#1 and the TRP#2 use the same physical cell identifier (PCI), as shown in FIG. 6. Each TRP schedules the PDSCH/PUSCH transmission on the TRP based on DCI. It should be noted that in mDCI-mTRP operation, a control resource set (CORESET) is grouped based on an RRC parameter, for example, a control resource set pool index (CORESETPoolIndex). For example, CORESETs with a CORESETPoolIndex of "0" are in one group and correspond to a TRP; or CORESETs with a CORESETPoolIndex of "1" are in another group and correspond to another TRP. In the case that the network device has not configured the CORESETPoolIndex for the CORESET, a default value is "0".

In an inter-cell mDCI-mTRP scenario, the TRP#1 in FIG. 6 may be understood as a reference TRP, that is, a TRP accessed by the UE during initial access. The UE has already achieved uplink and downlink synchronization and has a dedicated PC, that is, #1; For other TRPs, as the network device selects one TRP from at most seven TRPs to provide additional uplink transmission services for the UE, and the TRPs have different PCIs from the serving TRP and often do not achieve uplink and downlink synchronization with the UE in advance.

In some scenarios, a transmission configuration indicator (TCI) state is proposed for a downlink spatial quasi-co-located (QCL) (beam) indication, and transmission of QCL information in the time field and the frequency field. Specifically, a quasi-co-addressing (QCL) relationship is a large-scale decline relationship from a source reference signal to a target reference signal. For the beam indication, in the case that the UE acquires the QCL relationship between the source reference signal and the target reference signal from the network device, the UE uses a receive beam that receives the source reference signal previously during receiving the target reference signal.

In some scenarios, the indication mechanism of the TCI state is only appliable to downlink channels and signals. For uplink beam indication, a spatial relationship is defined to express the spatial relationship between two reference signals.

In some scenarios, a unified TCI state is proposed based on the TCI state to provide a unified uplink and downlink beam management mechanism for the communication system, and added important functions are as follows.

1. Three unified TCI states are proposed. A joint TCI state is applicable to both the uplink and downlink channels and signals, a downlink (DL) TCI state is only applicable to downlink channels and signals, and an uplink (DL) TCI state is only applicable to uplink channels and signals.

2. The downlink channels, that is, part of physical downlink control channels (PDCCH) and physical downlink shared channels (PDSCHs) and the signals (non-periodic channel state information-reference signals (CSI-RSs), are transmitted using the same downlink transmit beam, for example, a DL TCI state or a joint TCI state.

3. The uplink channels, for example, the PUCCH and the PUSCH and the signals (for example, a sounding reference signals (SRS), are transmitted using the same uplink transmit beam, for example, a UL TCI state or a joint TCI state.

4. The unified TCI state is dynamically updated and indicated using a MAC CE and/or DCI.

5. The unified TCI state is applicable to carrier aggregation scenarios, and a beam indication on a single component carrier (CC) is applicable to a plurality of different CCs.

6. The uplink beam indication and the uplink power control parameter are simultaneously given through the UL TCI state or the joint TCI state.

7. A beam management function between cells is supported.

In some scenarios, the terminal device acquires the TA based on a random access procedure. The random access procedure includes a random access procedure triggered by the network device and a spontaneous random access procedure of the UE. For example, the random access procedure triggered by the network device is triggered by transmitting a PDCCH order by the network device, and the network device provides sufficient information in the PDCCH order to cause the UE to transmit the PRACH. The spontaneity of the UE is that expiration of the TA timer timeout on the UE is a necessary condition.

FIG. 7 is a schematic diagram of a four-step random access procedure. The four-step random access procedure includes the following steps.

In step 1, the terminal device transmits a random access preamble (that is, a Msg 1) to the network device.

Specifically, the terminal device selects a PRACH resource. The network device transmits a parameter related to the random access to the terminal device over a system information block (SIB), and the parameter includes a reference signal received power (RSRP) threshold value (rsrp-Theshold SSB) for selecting a suitable synchronization signal block (SSB). The terminal device compares an RSRP measurement result under each SSB with the rsrp-ThreesholdSSB and selects the SSB with a measurement value greater than the threshold for access.

It should be noted that the SSB is also referred to as a synchronization signal/physical broadcast channel block (SS/PBCH block).

Each SSB corresponds to a group of random access preamble and random access occasion (a RACH occasion, RO) resources, and the terminal device transmits a PRACH based on the preamble and RO resources corresponding to the selected SSB.

In step 2, the network device transmits an RAR (that is, a Msg 2) to the terminal device.

Upon transmission of the preamble to the network device, the terminal device opens a random access response window (ra-ResponseWindow) and detects a corresponding PDCCH based on a random access radio network temporary identifier (RA-RNTI) in the ra-ResponseWindow. In the case that the terminal device detects the RA-RNTI-scrambled PDCCH, the terminal device acquires a PDSCH scheduled by that PDCCH. The PDSCH includes an RAR corresponding to the preamble.

In step 3, the terminal device transmits a Msg3.

Upon receipt of a RAR message, the terminal device determines whether the RAR is its RAR message. For example, the terminal device verifies the RAR using a preamble index, generates the Msg3 in an RRC layer upon determination that the RAR message is its RAR message, and transmits the Msg3 to the network device, which needs to carry identification information of the terminal device, or the like.

In step 4, the network device transmits a contention resolution message, that is, a Msg 4, to the termina device.

The network device transmits the Msg 4 to the terminal device, and the terminal device correctly receives the Msg 4 to complete the content resolution. For example, in the process of establishing the RRC connection, the Msg 4 carries an RRC connection establishment message.

In the random access procedure, upon transmission of the PRACH, the terminal device receives the RAR from the network device in the RAR receive window. In the case that the terminal device does not receive the RAR, the terminal device transmits the PRACH again on a next available PRACH resource.

In summary, in the case that the UE is uplink synchronized with the TRP#0 and uplink out-of-synchronized with the TRP#1, for the random access procedure triggered by the TRP#0, the UE acquires the TA value corresponding to the TRP#0 in the uplink synchronization state, and does not acquire the TA value corresponding to the TRP#1 in the uplink out-of-synchronization state, for the random access procedure triggered by the TA timer, the SSB selected by the UE should be transmitted from the uplink out-of-synchronized TRP, rather than from the TRP in the uplink synchronization state. However, the UE does not know which TRP the SSB comes from, and thus the UE is unable to acquire the suitable TA, such that the m-TRP-based uplink transmission is affected.

For convenient understanding of the technical solutions according to the embodiments of the present disclosure, the technical solutions according to the present disclosure are described in detail hereinafter with reference to specific embodiments. As optional solutions, the related technologies may be arbitrarily combined with the technical solutions according to the embodiments of the present disclosure, which fall within the scope of protection of the embodiments of the present disclosure. The embodiments of the present disclosure include at least some of the following content.

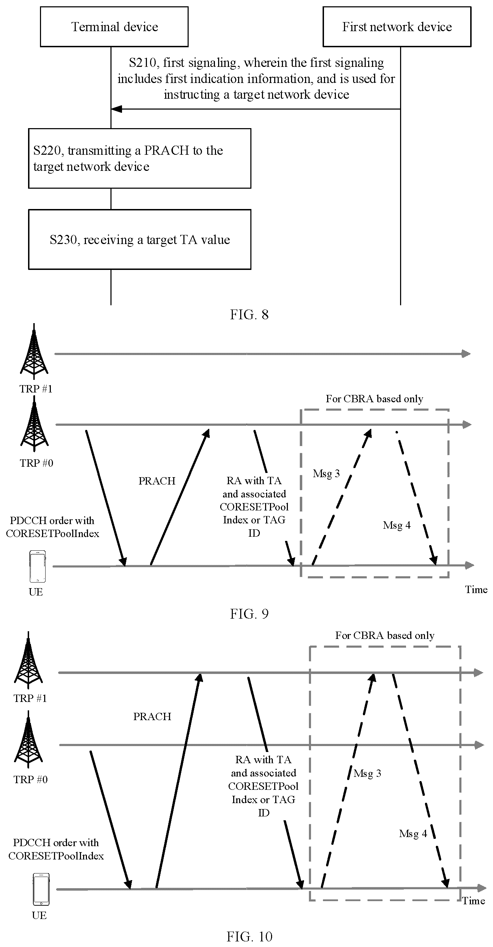

FIG. 8 is a schematic interaction diagram of a wireless communication method 200 according to some embodiments of the present disclosure. As shown in FIG. 8, the method 200 includes at least the following processes.

In S210, a terminal device receives first signaling from a first network device, wherein the first signaling is used for instructing (that is, triggering) the terminal device to initiate a random access to a target network device, and includes first indication information, wherein the first indication information indicates the target network device.

In S220, the terminal device transmits a PRACH to the target network device.

In S230, the terminal device receives a target TA value, wherein the target TA value is a TA value of the terminal device to the target network device.

In some embodiments, the first network device is a network device that the terminal device initially accesses or a network device in the uplink synchronization state. The terminal device has acquired a TA value of the terminal device for the first network device.

In some embodiments, the first network device is a network device associated with a specific search space, for example, a network device associated with a common search space (CSS).

In some embodiments, the target network device is a to-be-uplink-synchronized network device or a network device in the uplink out-of-synchronization state. That is, the terminal device has not acquired the TA value of the terminal device for the target network device, or, the TA value of the terminal device for the target network device fails or expires.

In some embodiments, a TAG is configured for each network device. For example, a TAG ID is configured for each network device. Thus, the network device is associated with (that is, corresponds to) the configured TAG ID, and the TA value (that is, the target TA value) of the terminal device for the network device is a TA value associated with (that is, corresponding to) the TAG ID.

In some embodiments, each network device is associated with (that is, corresponds to) a CORESETPoolIndex, and the TA value (that is, the target TA value) of the terminal device to the network device is a TA value corresponding to the CORESETPoolIndex.

In some embodiments, in the case that the first network device schedules the terminal device to transmit uplink information to a plurality of network devices, the first network device triggers the terminal device to initiate a random access to the target network device to acquire the target TA value. The plurality of network devices include the target network device. in some embodiments, the uplink information includes the PUSCH and/or the PUCCH.

In some embodiments, the plurality of network devices are several intra-cell network devices or several inter-cell network devices. For example, the plurality of network devices are several TRPs, and thus the embodiments of the present disclosure are applicable to intra-cell m-TRP uplink transmission or inter-cell m-TRP uplink transmission.

As distances between different network devices and the terminal device are different, and a large uplink synchronization error is present between the plurality of network devices, the out-of-synchronization between the terminal device and the network device is caused in the case that the terminal device transmits the uplink information to the plurality of network devices using a uniform TA, and thus it is not necessary for the terminal device to acquire the TA value of the network device (for example, TRP-specific).

In some embodiments, the first network device and the target network device are the same network device or different network devices.

For example, the first network device triggers the terminal device to initiate a random access to the first network device to acquire the TA value of the terminal device to the first network device.

For example, the first network device triggers the terminal device to initiate a random access to another network device to acquire the TA value of the terminal device to the another network device.

In some embodiments, the first network device is a network device in a serving cell or a network device in a non-serving cell.

In some embodiments, the target network device is a network device in the serving cell or a network device in the non-serving cell.

In some embodiments, in the case that the target network device and the first network device are different network devices, the first network device and the target network device are both the network devices in the serving cell; or, one of the target network device and the first network device is the network device in the serving cell, and the other of the target network device and the first network device is the network device in the non-serving cell, which is not limited in the embodiments of the present disclosure.

In some embodiments, the first network device and the target network device are TRPs.

For example, the first network device is the TRP#0, and the target network device is the TRP#1.

For example, the first network device is the TRP#0, and the target network device is the TRP#0.

In some embodiments, the first signaling is DCI signaling.

In some embodiments, the first signaling is a PDCCH order.

For example, in the case that a DCI format 1_0 is scrambled by a cell radio network temporary identifier (RNTI) (C-RNTI) and frequency field resource assignment (FDRA) fields are all 1, the DCI is a PDCCH order.

In some embodiments, the first signaling include a parameter for the terminal device to transmit the PRACH, for example, a preamble index, an SSB index, a PRACH mask index (RO), and the like.

In some embodiments, the first signaling is transmitted over a specific control resource set (CORESET), for example, the CORESET#0. A default CORESETPoolIndex of THE CORESET#0 is 0, and the first signaling is considered to be transmitted over a specific control resource set pool.

In some embodiments, the first signaling is transmitted through a specific search space, for example, the CSS.

In some embodiments, upon receipt of the first signaling from the first network device, the terminal device determines, based on first indication information in the first signaling, to initiate the random access to the target network device, and further transmits the PRACH to the target network device. For example, the PRACH is transmitted using the parameter indicated in the first signaling for transmitting the PRACH.

Furthermore, the terminal device receives the target TA value. For example, the terminal device acquires the TA value via the RAR.

In some embodiments, the target TA value is transmitted from a second network device to the terminal device.

In some embodiments, the second network device is the target network device, a network device associated with the CSS, or a network device associated with a specific CORESET, for example, a network device associated with the CORESET#0 or a network device associated with the CORESETPoolIndex#0.

In some embodiments, for the four-step random access procedure, the terminal device further transmits the Msg3 to the target network device.

Furthermore, the terminal device further receives the Msg4 from the second network device.

For example, the terminal device further receives the Msg4 from the target network device or the Msg4 from the network device associated with the CSS.

It should be understood that in the embodiments of the present disclosure, the first indication information directly or indirectly indicates the target network device, which is not limited in the embodiments of the present disclosure.

For example, in the case that a network device is uniquely determined based on the first information, the first network device indicates the target network device via the first information. That is, the first indication information indicates the first information, and the terminal device determines, based on the first information, to which network device to initiate the random access.

In some embodiments, the first indication information is identification information of the target network device, and the terminal device determines, based on the identification information of the target network device, to which network device to initiate the random access.

In some embodiments, the first indication information indicates through a bitmap mode which network device the terminal device initiates the random access to.

For example, the first indication information includes a plurality of bits, each bit corresponds to a network device, and a value of each bit indicates whether to trigger the terminal device to initiate the random access to the corresponding network device. For example, a bit value of 1 indicates triggering the terminal device to initiate the random access, and otherwise not triggering.

In some embodiments, the number of the plurality of bits is determined based on the maximum number of the plurality of TRPs in the m-TRP-based uplink transmission.

For example, the plurality of TRPs include two TRPs (that is, the TRP#0 and the TRP#1), and the plurality of bits are two bits corresponding to the TRP#0 and the TRP#1 respectively. In the case that the bit value corresponding to the TRP is 1, the terminal device is triggered to initiate the random access to the TRP, otherwise the terminal device is not triggered to initiate the random access to the TRP.

Detailed implementation of the first indication information is described in conjunction with specific embodiments hereinafter.

**Embodiments 1**

In the first embodiments, the first indication information indicates a first control resource set pool index (CORESETPoolIndex). The first control resource set pool index is associated with the target network device, that is, the target network device belongs to a control resource set pool identified by the first control resource set pool index.

Optionally, in the first embodiments, the control resource set pool index is associated with a TAG ID.

Optionally, the control resource set pool index is in one-to-one correspondence to the TAG ID.

Optionally, the association relationship is predefined or configured by the network device.

It should be understood that in the embodiments of the present disclosure, in above association relationship, the TAG ID may be replaced by other information that is uniquely associated with or indicates the network device, which is not limited in the present disclosure.

In some embodiments, the first CORESETPoolIndex is associated with a first TAG ID, and the first TAG ID is associated with the target network device. Therefore, in the case that the first CORESETPoolIndex is associated with the first TAG ID, and the first TAG ID is associated with the target network device, the first network device indicates the target network device through the first CORESETPoolIndex.

In some embodiments, the first network device is the TRP#0, the target network device is the TRP#1, the TRP#0 is associated with the CORESETPoolIndex#0, and the TRP#1 is associated with the CORESETPoolIndex#1, the TRP#0 associated with the CORESETPoolIndex#0 triggers the terminal device to initiate the random access to the TRP#1 associated with the CORESETPoolIndex of 1.

In some embodiments, the first signaling includes a first information field, and the first information field indicates the CORESETPoolIndex associated with the target network device.

In some embodiments, a value of the first information field indicates the CORESETPoolIndex associated with the network device.

In some embodiments, a length of the first information field is determined based on the number of CORESETPoolIndexes supported by the terminal device and/or a length of the CORESETPoolIndex.

In some embodiments, the number of CORESETPoolIndexes is 2, that is, 0 and 1, the first information field is 1 bit.

In some embodiments, the number of CORESETPoolIndexes is 4, that is, 0 to 3, the first information field is 2 bits.

In some embodiments, the number of CORESETPoolIndexes is 5, that is, 0 to 7, the first information field is 3 bits.

Optionally, in the case that the random access preamble indexes are not all 0, the first information field indicates the CORESETPoolIndex. Otherwise, the first information field is reserved. The CORESETPoolIndex is used for determining the TAG ID transmitting the PRACH, that is, determining which network device associated with the TAG ID to transmit the PRACH to.

Detailed implementation of the first embodiments is described hereinafter in conjunction with Embodiments 1-1, Embodiments 1-2, and Embodiments 1-3 using an example where the first signaling is the PDCCH order.

### Embodiment 1-1

In Embodiment 1-1, the first network device is the TRP#0, and the target network device is the TRP#0.

As shown in FIG. 9, the following steps are included.

In step 1, the TRP#0 transmits the PDCCH order to the UE, wherein the PDCCH order carries the CORESETPoolIndex associated with the TRP#0, and also carries the parameter for transmitting the PRACH, for example, the preamble index, the SSB index, the RO, and the like.

In step 2, the UE transmits the PRACH to the TRP#0 based on the CORESETPoolIndex carried in the PDCCH order.

Specifically, the UE transmits the PRACH to the TRP#0 based on the parameter carried in the PDCCH order for transmitting the PRACH.

In step 3, the TRP#0 transmits the RAR to the UE, wherein the RAR includes the target TA value.

For example, the TRP#0 calculates the TA value, that is, the target TA value, of the UE to the TRP#0 based on an arrival time of the PRACH.

Optionally, the RAR further includes the CORESETPoolIndex or the TAG ID associated with the target TA value, that is, the CORESETPoolIndex or TAG ID associated with the TRP#0.

Optionally, the contention-based four-step random access procedure further includes the following steps.

In step 4, the UE transmits the Msg 3 to the TRP#0.

In step 5, the TRP#0 transmits the Msg 4 to the UE.

### Embodiment 1-2

In Embodiment 1-2, the first network device is the TRP#0, and the target network device is the TRP#1.

As shown in FIG. 10, the following steps are included.

In step 1, the TRP#0 transmits the PDCCH order to the UE, wherein the PDCCH order carries the CORESETPoolIndex associated with the TRP#1, and also carries the parameter for transmitting the PRACH, for example, the preamble index, the SSB index, the RO, and the like.

In step 2, the UE transmits the PRACH to the TRP#1 based on the CORESETPoolIndex carried in the PDCCH order.

Specifically, the UE transmits the PRACH to the TRP#1 based on the parameter carried in the PDCCH order for transmitting the PRACH.

In step 3, the TRP#1 transmits the RAR to the UE, wherein the RAR includes the target TA value.

For example, the TRP#1 calculates the TA value, that is, the target TA value, of the UE to the TRP#1 based on an arrival time of the PRACH.

Optionally, the RAR further includes the CORESETPoolIndex or the TAG ID associated with the target TA value, that is, the CORESETPoolIndex or TAG ID associated with the TRP#1.

Optionally, the contention-based four-step random access procedure further includes the following steps.

In step 4, the UE transmits the Msg 3 to the TRP#1.

In step 5, the TRP#1 transmits the Msg 4 to the UE.

It should be noted that in the embodiments 1-1 and the embodiments 1-2, the RAR is replied by the target network device. That is, the terminal device transmits the PRACH to a network device, the network device replies the RAR to the UE and carries the target TA value in the RAR. Unlike the embodiments 1-1 and the embodiments 1-2, in the embodiments 1-3, the RAR and/or the Msg4 are transmitted by the network device associated with the CSS.

**Embodiment 1-3**

In Embodiment 1-3, the first network device is the TRP#0, the target network device is the TRP#1, and the TRP#0 is a TRP associated with the CSS.

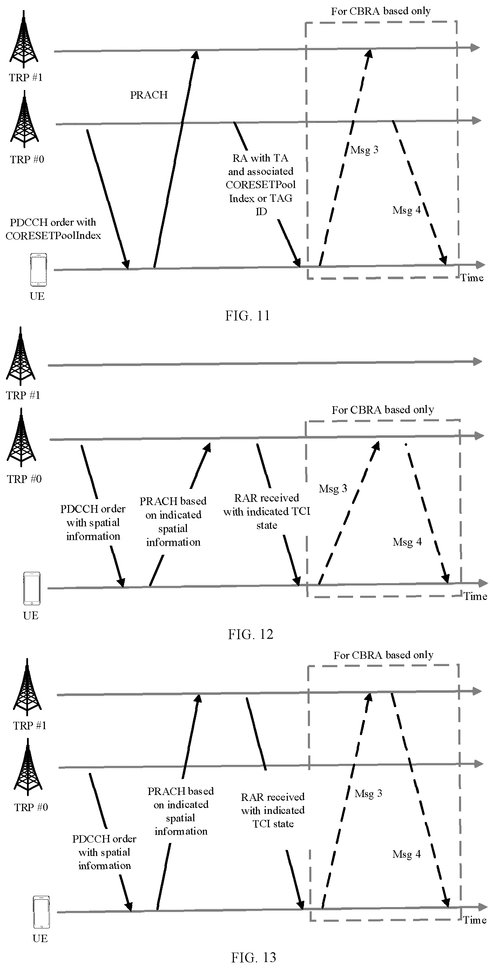

As shown in FIG. 11, the following steps are included.

In step 1, the TRP#0 transmits the PDCCH order to the UE, wherein the PDCCH order carries the CORESETPoolIndex associated with the TRP#1, and also carries the parameter for transmitting the PRACH, for example, the preamble index, the SSB index, the RO, and the like.

In step 2, the UE transmits the PRACH to the TRP#1 based on the CORESETPoolIndex carried in the PDCCH order.

Specifically, the UE transmits the PRACH to the TRP#1 based on the parameter carried in the PDCCH order for transmitting the PRACH.

In some embodiments, the TRP#1 calculates the TA value, that is, the target TA value, of the UE to the TRP#1 based on the arrival time of the PRACH.

Furthermore, the TRP#1 transmits the target TA value to the TRP#0, and the TRP#0 transmits the RAR to the UE. The RAR carries the target TA value.

In step 3, the TRP#0 transmits the RAR to the UE, wherein the RAR includes the target TA value.

Optionally, the RAR further includes the CORESETPoolIndex or the TAG ID associated with the target TA value, that is, the CORESETPoolIndex or TAG ID associated with the TRP#1.

Optionally, the contention-based four-step random access procedure further includes the following steps.

In step 4, the UE transmits the Msg 3 to the TRP#1.

In step 5, the TRP#0 transmits the Msg 4 to the UE.

**Embodiments 2**

In the second embodiments, the first indication information indicates first spatial information. The first spatial information is associated with the target network device.

In some embodiments, the first spatial information is information related to a spatial field, for example, information related to a reference signal, information related to a beam, and the like.

In some embodiments, the first signaling indicates which network device to transmit the PRACH to by indicating the uplink beam to the terminal device.

In some embodiments, the first signaling indicates a spatial filter for transmitting the PRACH, that is, a transmission filter of the PRACH.

In some embodiments, the first signaling indicates a spatial filter for receiving the RAR, that is, a receive filter of the RAR.

In the embodiments of the present disclosure, the transmit filter is also referred to as a transmit beam, and the receive filter is also referred to as a receive beam.

Optionally, in the second embodiments, the spatial information is associated with the TAD ID.

Optionally, the association relationship is predefined or configured by the network device.

Optionally, the spatial information is in one-to-one correspondence to the TAG ID.

It should be understood that in the embodiments of the present disclosure, in above association relationship, the TAG ID may be replaced by other information that is uniquely associated with or indicates the network device, which is not limited in the present disclosure.

In some embodiments, first spatial information is associated with the first TAG ID, and the first TAG ID is associated with the target network device. Therefore, in the case that the first spatial information is associated with the first TAG ID, and the first TAG ID is associated with the target network device, the first network device indicates the target network device through the first spatial information.

In some embodiments, the first spatial information includes a first TCI state and/or first spatial relationship information.

In some embodiments, the first TCI state is associated with the first TAG ID, and the first TAG ID is associated with the target network device. Optionally, the first TCI state is an UL TCI state or a joint TCI state.

In some embodiments, the first spatial relationship information is associated with the first TAG ID, and the first TAG ID is associated with the target network device.

In some embodiments, the first TCI state or the first spatial relationship information indicates the transmit beam of the PRACH.

For example, the first TCI state indicates a reference signal resource index, for example, the SSB resource index, the CSI-RS resource index, the SRS resource index, or the like. In the case that the first TCI state indicates a downlink reference signal resource index, for example, the SSB resource index or the CSI-RS resource index, the terminal device determines a transmit beam corresponding to a receive beam that receives the reference signal resource indicated by the first TCI state as the transmit beam of the PRACH, or, in the case that the first TCI state indicates an uplink reference signal resource index, for example, the SRS resource index, the terminal device determines a transmit beam that receives the reference signal resource indicated by the first TCI state as the transmit beam of the PRACH.

For example, the first spatial relationship information indicates the reference signal resource index, for example, the SSB resource index, the CSI-RS resource index, the SRS resource index, and the like. In the case that the first spatial relationship information indicates the downlink reference signal resource index, for example, the SSB resource index or the CSI-RS resource index, the terminal device determines the transmit beam corresponding to the receive beam that receives the reference signal resource indicated by the first spatial relationship information as the transmit beam of the PRACH; or, in the case that the first spatial relationship information indicates the uplink reference signal resource index, for example, the SRS resource index, the terminal device determines the transmit beam that receives the reference signal resource indicated by the first spatial relationship information as the transmit beam of the PRACH.

In some embodiments, the first signaling includes the SSB resource index for measuring a downlink reference time.

In some embodiments, in the case that the first spatial information indicates the reference signal resource index (for example, the SSB index), the first spatial information is used for measuring the downlink reference time and indicating the transmit beam of the PRACH. Optionally, in this case, the first spatial information reuses the SSB resource index field in the first signaling.

In some embodiments, the first signaling further includes: second indication information. The second indication information indicates a spatial filter used by the terminal device in receiving the RAR.

For example, the second indication information indicates a second TCI state. The second TCI state is the DL TCI state or the joint TCI state.

In some embodiments, the first signaling includes a second information field for indicating the first spatial information.

Optionally, a length of the second information field is determined based on the number of pieces of first spatial information, for example, the number of TCI states, the number of spatial relationships, and the like.

For example, the second information field is 3 bits or in other bit lengths, which is not limited in the present disclosure.

In some embodiments, the first signaling includes a third information field for indicating the second TCI state.

Optionally, a length of the third information field is determined based on the number of TCI states, and the like.

For example, the third information field is 3 bits or in other bit lengths, which is not limited in the present disclosure.

In some embodiments, the first signaling includes: an SS/PBCH Index field, indicating the SS/PBCH (that is, the SSB) used for determining the RO for transmitting the PRACH; the second information field, indicating the first TCI state or the first spatial relationship; and the third information field (optional), indicating the second TCI state.

Optionally, in the case that the second information field indicates the reference signal resource index, the second information field reuses information bits of the SS/PBCH Index field for carrying. That is, the second information field is used for determining to which network device to transmit the PRACH and determining the RO resource for transmitting the PRACH.

Optionally, in the case that the random access preamble indexes are not all 0, the second information field indicates the first TCI state or the first spatial relationship. Otherwise, the second information field is reserved.

Optionally, in the case that the random access preamble indexes are not all 0, the third information field indicates the second TCI state. Otherwise, the third information field is reserved.

It should be understood that the indication mode of the transmit beam of the PRACH and the receive beam of the RAR in the second embodiments are also applicable to first embodiments 1 and subsequent third embodiments.

For example, in the first embodiments, the first signaling includes the first information field for indicating the first CORESETPoolIndex. Furthermore, the first signaling also includes the second information field for indicating the first TCI state or the first spatial relationship, or further includes the third information field for indicating the second TCI state.

For example, in the third embodiments, the first signaling includes a fourth information field for indicating the first PCI, and further includes the second information field for indicating the first TCI state or the first spatial relationship, or further includes the third information field for indicating the second TCI state.

Detailed implementation of the second embodiments is described hereinafter in conjunction with Embodiment 2-1, Embodiment 2-2, and Embodiment 2-3 using an example where the first signaling is the PDCCH order.

## Embodiment 2-1

In Embodiment 2-1, the first network device is the TRP#0, and the target network device is the TRP#0.

As shown in FIG. 12, the following steps are included.

In step 1, the TRP#0 transmits the PDCCH order to the UE, wherein the PDCCH order carries spatial information associated with the TRP#0, for example, the TCI state or the spatial relationship, and also carries the parameter for transmitting the PRACH, for example, the preamble index, the SSB index, the RO, or the like.

In step 2, the UE transmits the PRACH to the TRP#0 based on the spatial information carried in the PDCCH order.

Optionally, the UE transmits the PRACH to the TRP#0 based on the transmit beam indicated by the spatial information.

In step 3, the TRP#0 transmits the RAR to the UE, wherein the RAR includes the target TA value.

For example, the TRP#0 calculates the TA value, that is, the target TA value, of the UE to the TRP#0 based on the arrival time of the PRACH.

Optionally, the UE receives the RAR based on the receive beam of the RAR indicated in the PDCCH order.

Optionally, the RAR further includes the CORESETPoolIndex or the TAG ID associated with the target TA value, that is, the CORESETPoolIndex or TAG ID associated with the TRP#0.

Optionally, the contention-based four-step random access procedure further includes the following steps.

In step 4, the UE transmits the Msg 3 to the TRP#0.

In step 5, the TRP#0 transmits the Msg 4 to the UE.

## Embodiment 2-2

In Embodiment 2-2, the first network device is the TRP#0, and the target network device is the TRP#1.

As shown in FIG. 13, the following steps are included.

In step 1, the TRP#0 transmits the PDCCH order to the UE, wherein the PDCCH order carries the spatial information associated with the TRP#1, for example, the TCI state or the spatial relationship, and also carries the parameter for transmitting the PRACH, for example, the preamble index, the SSB index, the RO, and the like.

In step 2, the UE transmits the PRACH to the TRP#1 based on the spatial information carried in the PDCCH order.

Optionally, the UE transmits the PRACH to the TRP#1 based on the transmit beam indicated by the spatial information.

In step 3, the TRP#1 transmits the RAR to the UE, wherein the RAR includes the target TA value.

For example, the TRP#1 calculates the TA value, that is, the target TA value, of the UE to the TRP#1 based on an arrival time of the PRACH.

Optionally, the UE receives the RAR based on the receive beam of the RAR indicated in the PDCCH order.

Optionally, the RAR further includes the CORESETPoolIndex or the TAG ID associated with the target TA value, that is, the CORESETPoolIndex or TAG ID associated with the TRP#1.

Optionally, the contention-based four-step random access procedure further includes the following steps.

In step 4, the UE transmits the Msg 3 to the TRP#1.

In step 5, the TRP#1 transmits the Msg 4 to the UE.

It should be noted that in Embodiment 2-1 and Embodiment 2-2, the RAR is replied by the target network device. That is, the terminal device transmits the PRACH to a network device, the network device replies the RAR to the UE and carries the target TA value in the RAR. Different from Embodiment 2-1 and Embodiment 2-2, in Embodiments 2-3, the RAR and/or the Msg4 are transmitted by the network device associated with the CSS. The TRP#0 is the TRP associated with the CSS.

## Embodiment 2-3

In Embodiment 1-3, the first network device is the TRP#0, and the target network device is the TRP#1.

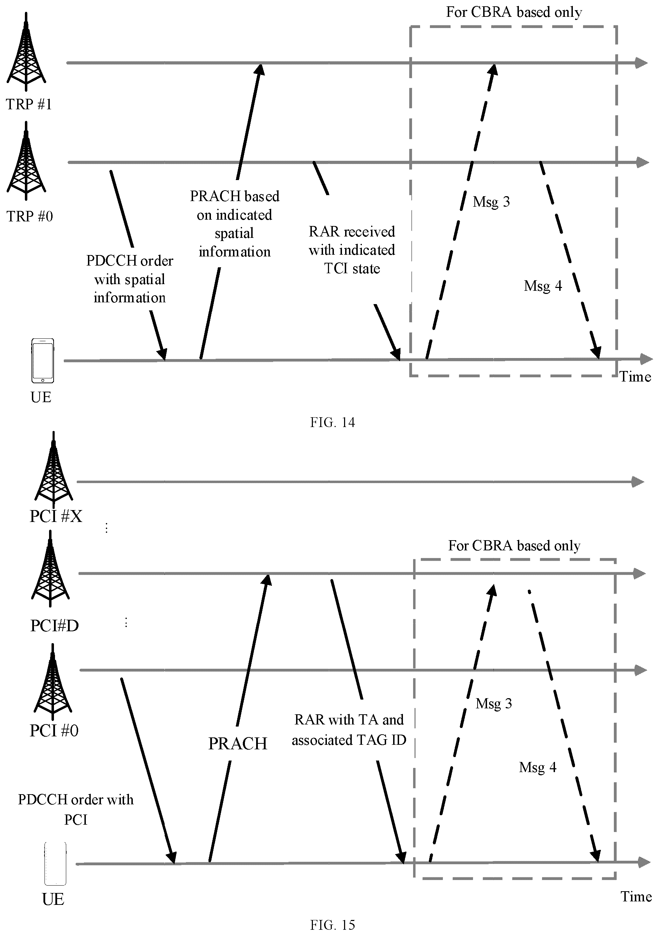

As shown in FIG. 14, the following steps are included.

In step 1, the TRP#0 transmits the PDCCH order to the UE, wherein the PDCCH order carries the spatial information associated with the TRP#1, and also carries the parameter for transmitting the PRACH, for example, the preamble index, the SSB index, the RO, and the like.

In step 2, the UE transmits the PRACH to the TRP#1 based on the spatial information carried in the PDCCH order.

Optionally, the UE transmits the PRACH to the TRP#1 based on the transmit beam indicated by the spatial information.

In some embodiments, the TRP#1 calculates the TA value, that is, the target TA value, of the UE for the TRP#1 based on the arrival time of the PRACH.

Furthermore, the TRP#1 transmits the target TA value to the TRP#0, and the TRP#0 transmits the RAR to the UE. The RAR carries the target TA value.

In step 3, the TRP#0 transmits the RAR to the UE, wherein the RAR includes the target TA value.

Optionally, the UE receives the RAR based on the receive beam of the RAR indicated in the PDCCH order.

Optionally, the RAR further includes the CORESETPoolIndex or the TAG ID associated with the target TA value, that is, the CORESETPoolIndex or TAG ID associated with the TRP#1.

Optionally, the contention-based four-step random access procedure further includes the following steps.

In step 4, the UE transmits the Msg 3 to the TRP#1.

In step 5, the TRP#0 transmits the Msg 4 to the UE.

## Embodiments 3

In Embodiments 3, the first indication information indicates a first PCI. The first PCI is associated with the target network device.

In the third embodiments, the PCI is associated with the TAD ID.

Optionally, the association relationship is predefined or configured by the network device.

Optionally, the PCI is in one-to-one correspondence to the TAG ID.

It should be understood that in the embodiments of the present disclosure, in above association relationship, the TAG ID may be replaced by other information that is uniquely associated with or indicates the network device, which is not limited in the present disclosure.

In some embodiments, the first PCI being associated with the target network device includes the following cases:

The first PCI is associated with the first TAG ID, and the first TAG ID is associated with the target network device; or the first PCI is associated with the first CORESETPoolIndex, and the first CORESETPoolIndex is associated with the target network device.

Thus, in the case that the first PCI is associated with the first TAG ID or the first CORESETPoolIndex, and the first TAG ID or the first CORESETPoolIndex is associated with the target network device, the first network device indicates the target network device through the first PCI.

In some embodiments, the first signaling includes a fourth information field. The fourth information field indicates the PCI associated with the target network device.

Optionally, a value of the fourth information field is used for indicates the PCI associated with the network device.

Optionally, a length of the fourth information field is determined based on a length of the PCI and/or the number of PCIs.

For example, the fourth information field is 10 bits or in other bit lengths.

In some embodiments, the target network device is a network device in the non-serving cell, and the terminal device needs to acquire the corresponding TA value before communicating with the network device in the non-serving cell. As a plurality of, for example, at most seven, network devices are in the alternative non-serving cell, the terminal device wirelessly knows in advance which network device to be uplink synchronized with. In this case, the network device is indicated by the PCI.

In some embodiments, in the case that the target network device is the network device in the non-serving cell, the terminal device needs to measure the reference signal running through the non-serving cell in advance, for example, the SSB, perform the downlink synchronization, and find a suitable downlink receive beam and the corresponding uplink transmitting beam.

Detailed implementation of the first embodiments is described hereinafter in conjunction with Embodiments 3-1, Embodiments 3-2, and Embodiments 3-3 using an example where the first signaling is the PDCCH order.

## Embodiment 3-1

In Embodiment 3-1, the PCI associated with the first network device is a PCI#0, and the PCI associated with the target network device is a PCI#D. The first network device is a network device in the serving cell, and the target network device is a network device in the non-serving cell.

As shown in FIG. 15, the following steps are included.

In step 1, the first network device transmits the PDCCH order to the UE, wherein the PDCCH order carries the PCI#D, and also carries the parameter for transmitting the PRACH.

In step 2, the UE transmits the PRACH to the target network device based on the PCI#D carried in the PDCCH order.

Specifically, the UE transmits the PRACH to the target network device based on the parameter carried in the PDCCH order for transmitting the PRACH.

In step 3, the target network device transmits the RAR to the UE, wherein the RAR includes the target TA value.

For example, the target network device calculates the TA value, that is, the target TA value, of the UE to the target network device based on the arrival time of the PRACH.

Optionally, the RAR further includes the CORESETPoolIndex or the TAG ID associated with the target TA value, that is, the CORESETPoolIndex or TAG ID associated with the target network device.

Optionally, the contention-based four-step random access procedure further includes the following steps.

In step 4, the UE transmits the Msg 3 to the target network device.

In step 5, the target network device transmits the Msg 4 to the UE.

## Embodiment 3-2

In Embodiment 3-2, the PCI associated with the first network device is the PCI#D, and the PCI associated with the target network device is the PCI#D. That is, the first network device and the target network device are the same network device, and the network device is a network device in the non-serving cell.

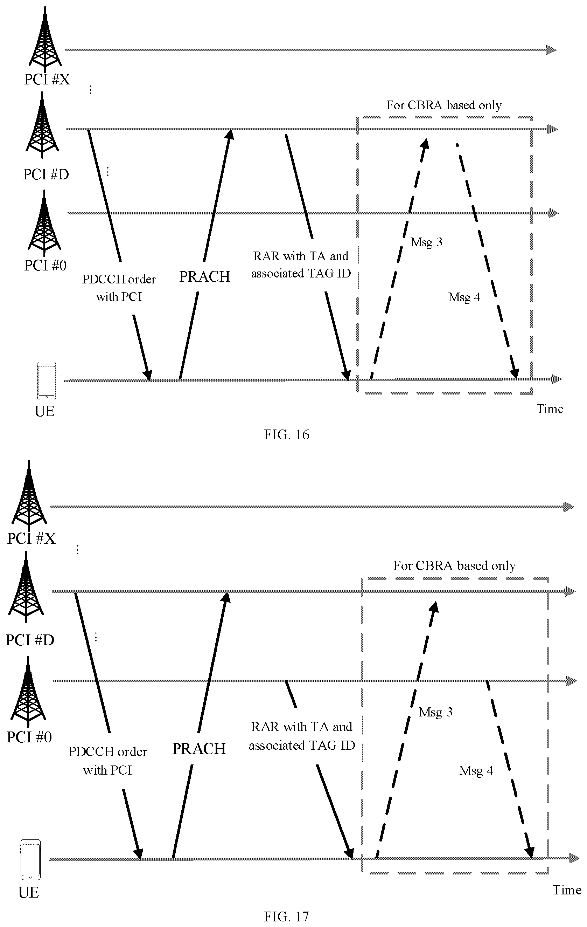

As shown in FIG. 16, the following steps are included.

In step 1, the first network device transmits the PDCCH order to the UE, wherein the PDCCH order carries the PCI#D, and also carries the parameter for transmitting the PRACH.

In step 2, the UE transmits the PRACH to the first network device, that is, the target network device, based on the PCI#D carried in the PDCCH order.

Specifically, the UE transmits the PRACH to the target network device based on the parameter carried in the PDCCH order for transmitting the PRACH.

In step 3, the target network device transmits the RAR to the UE, wherein the RAR includes the target TA value.

For example, the target network device calculates the TA value, that is, the target TA value, of the UE to the target network device based on the arrival time of the PRACH.

Optionally, the RAR further includes the CORESETPoolIndex or the TAG ID associated with the target TA value, that is, the CORESETPoolIndex or TAG ID associated with the target network device.

Optionally, the contention-based four-step random access procedure further includes the following steps.

In step 4, the UE transmits the Msg 3 to the target network device.

In step 5, the target network device transmits the Msg 4 to the UE.

It should be noted that in the embodiments 3-1 and the embodiments 3-2, the RAR is replied by the target network device. That is, the terminal device transmits the PRACH to a network device, the network device replies the RAR to the UE and carries the target TA value in the RAR. Unlike the embodiments 3-1 and the embodiments 3-2, in the embodiments 3-3, the RAR and/or the Msg4 are transmitted by the network device associated with the CSS. The network device associated with the PCI#0 is a network device associated with the CSS.

**Embodiment 3-3**

In Embodiment 3-3, the PCI associated with the first network device is the PCI#0, and the PCI associated with the target network device is the PCI#D. The first network device is the network device in the serving cell, and the target network device is the network device in the non-serving cell.

As shown in FIG. 17, the following steps are included.

In step 1, the first network device transmits the PDCCH order to the UE, wherein the PDCCH order carries the PCI#D, and also carries the parameter for transmitting the PRACH.

In step 2, the UE transmits the PRACH to the target network device based on the PCI#D carried in the PDCCH order.

Specifically, the UE transmits the PRACH to the target network device based on the parameter carried in the PDCCH order for transmitting the PRACH.

For example, the target network device calculates the TA value, that is, the target TA value, of the UE to the target network device based on the arrival time of the PRACH.

Furthermore, the target network device transmits the target TA value to the first network device, and the first network device transmits the RAR to the UE.

In step 3, the first network device transmits the RAR to the UE, wherein the RAR includes the target TA value.

Optionally, the RAR further includes the CORESETPoolIndex or the TAG ID associated with the target TA value, that is, the CORESETPoolIndex or TAG ID associated with the target network device.

Optionally, the contention-based four-step random access procedure further includes the following steps.

In step 4, the UE transmits the Msg 3 to the target network device.

In step 5, the first network device transmits the Msg 4 to the UE.

Based on above technical solutions, the first network device triggers, based on the first signaling, the terminal device to initiate the random access to the target network device. Then, the terminal device transmits the PRACH to the target network device, receives the RAR, and acquires the TA value of the terminal device for the target network device from the RAR. Thus, in the embodiments of the present disclosure, the first signaling is set, such that the terminal device initiates the random access to a specific network device, and thus acquires the TA of the terminal device for the specific network device. That is, the TA of the specific network device is acquired, and the terminal device acquires the suitable TA.

For example, the target network device is indicated by the CORESETPoolIndex.

For example, the target network device is indicated by the spatial information, for example, the TCI state or the spatial relationship.

For example, the target network device is indicated by the PCI.

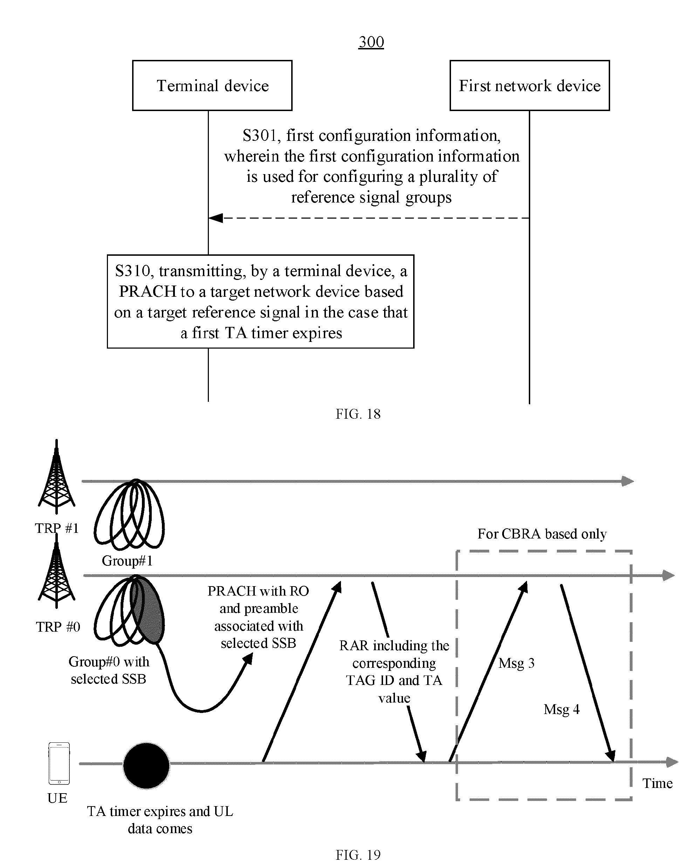

FIG. 18 is a schematic interaction diagram of a wireless communication method 300 according to some embodiments of the present disclosure. As shown in FIG. 18, the method 300 includes at least the following processes.

In S310, a terminal device transmits a PRACH to a target network device based on a target reference signal in the case that a first TA timer expires.

The first TA timer is associated with a first TAG ID, the target network device is associated with the first TAG ID, and the target reference signal is a reference signal associated with the target network device and selected by the terminal device from a plurality of candidate reference signals.

In some embodiments, the first TAG ID is a TAG ID corresponding to the TAG configured for the target network device.

In some embodiments, the first TA timer is a timer configured for the TAG corresponding to the first TAG ID, and is also referred to as a time alignment timer (TimeAlignmentTimer).

As described above, in related technologies, during selecting the reference signal, the terminal device does not know which network device transmitting the reference signal. Therefore, the reference signal selected by the terminal device is transmitted by the network device that is in the uplink synchronization state. In this case, it is not necessary for the terminal device to initiate the random access to the network device.

In the embodiments of the present disclosure, the reference signal is associated with the network device, such that the terminal device selects the reference signal associated with the target network device to which the random access is initiated in the case that the terminal device initiates the random access, determines the PRACH resource corresponding to the reference signal, and then transmits the PRACH to the target network device based on the PRACH resource.

In some embodiments, the candidate reference signal is the SSB, the CSI-RS, the SRS, and the like, which is not limited in the present disclosure.

It should be understood that the present disclosure does not limit the specific mode of establishing the association relationship between the reference signal and the network device.

In some embodiments, the plurality of candidate reference signals are organized into a plurality of reference signal groups. Each of the plurality of reference signal groups is associated with a network device, and includes one or more candidate reference signals.

Optionally, each of the plurality of reference signal groups being associated with the network device includes a case where:

each of the plurality of reference signal groups is associated with the TAG ID or the CORESETPoolIndex, and the TAG ID or the CORESETPoolIndex is associated with the network device.

In some embodiments, the plurality of reference signal groups are predefined. That is, the terminal device and the network device acquire group information without information interaction.

In some embodiments, the plurality of reference signal groups are configured by network device.

For example, as shown in FIG. 18, the method 300 further includes the following process.

In S301, the terminal device receives the first configuration information from the first network device, wherein the first configuration information is used for configuring the plurality of reference signal groups. Each of the plurality of reference signal groups is associated with a network device, for example, associated with the TAG ID or the CORESETPoolIndex.

In some embodiments, the first network device is the network device in the uplink synchronization state. That is, the terminal device and the first network device achieve uplink and downlink synchronization.

In some embodiments, the first network device is the network device associated with the specific search space, for example, the network device associated with a common search space (CSS).

In some embodiments, the first configuration information is carried over RRC signaling, or other downlink signaling, which is not limited in the present disclosure.

In some implementations, the network device configures the TAG ID or the CORESETPoolIndex for each reference signal. As such, the plurality of reference signal groups are formed by configuring corresponding TAG IDs or CORESETPoolIndexes for different reference signals. The reference signals in each reference signal group correspond to the same TAG ID or CORESETPoolIndex.

In other implementations, the network device configures a corresponding group of reference signals for each TAG ID or CORESETPoolIndex. For example, {SSB#0, SSB#1,..., SSB#31} is configured for the TAG ID#0 or the CORESETPoolIndex#0, and {SSB#32, SSB#1,..., SSB#63} is configured for the TAG ID#1 or the CORESETPoolIndex#1.

In some implementations, the plurality of reference signal groups are organized based on a predetermined rule. For example, the plurality of candidate reference signals are grouped based on indexes of the plurality of candidate reference signals, that is, the indexes of the reference signals in one reference signal group have a relationship.

For example, SSBs of even indexes are in a group, which correspond to the TAG ID#0 or the CORESETPoolIndex#0, and SSBs of odd indexes are in a group, which correspond to the TAG ID#1 or the CORESETPoolIndex#1.

For example, SSBs of the first half of SSB indexes are in a group, which correspond to the TAG ID#0 or the CORESETPoolIndex#0; the SSBs with the latter half of the SSB index are in a group, which correspond to the TAG ID#1 or the CORESETPoolIndex#1.

Thus, after the first TA timer expires, the terminal device needs to select the reference signal in the corresponding reference signal group based on the TAG or the CORESETPoolIndex corresponding to the first TA timer. For example, the terminal device selects the reference signal that meets an RSRP threshold from the reference signal group to avoid selecting the reference signal in the reference signal group corresponding to the network device in the uplink synchronization state.

In some embodiments, transmitting the PRACH to the target network device based on a target reference signal includes: selecting a PRACH resource associated with the target reference signal from the preconfigured PRACH resources, for example, the RO resource, or the preamble; and transmitting the PRACH to the target network device using the PRACH resource associated with the target reference signal.

In some embodiments, the method 300 further includes the following process.

The terminal device receives the RAR, wherein the RAR includes the target TA value.

Optionally, the RAR further includes the CORESETPoolIndex or the TAG ID associated with the target TA value, that is, the CORESETPoolIndex or the TAG ID associated with the target network device.

In some embodiments, the RAR is transmitted by the second network device to the terminal device.

Optionally, the second network device is the target network device, the network device associated with the CSS, or the network device associated with a specific CORESET, for example, the network device associated with the CORESET#0, or the network device associated with the CORESETPoolIndex#0.

In some embodiments, the first network device, the second network device, and the target network device are TRPs.

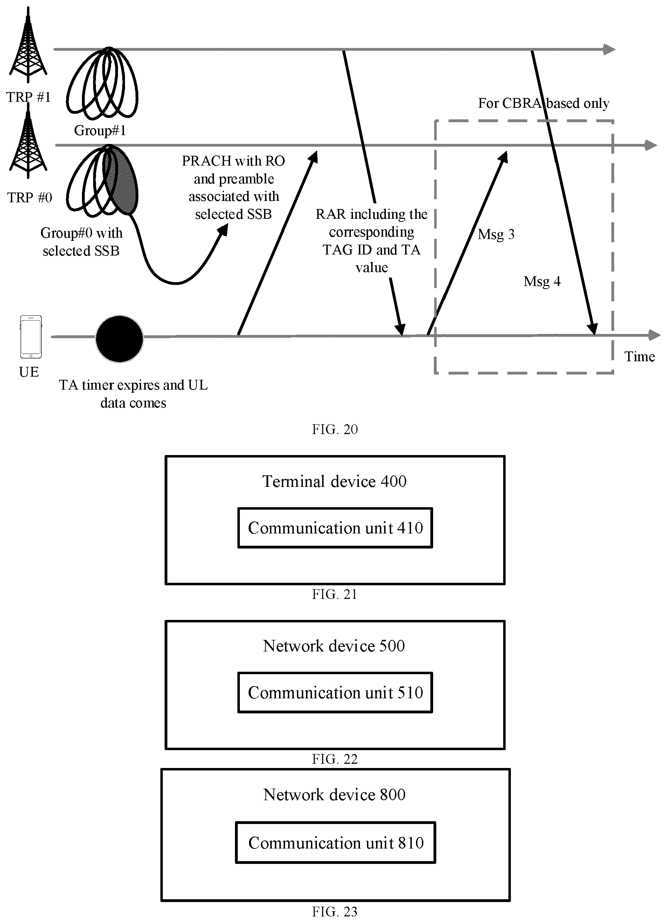

Detailed implementation of the method 300 is described in conjunction with FIG. 19 and FIG. 20.

In the embodiments of FIG. 19 and FIG. 20, the plurality of reference signal groups include the SSB group#0 and the SSB group#1. The SSB group#0 is associated with the TRP#0, the SSB group#1 is associated with the TRP#1, the TRP#0 is associated with the first TAG ID, and the first TAG ID is associated with the first TA timer.

As shown in FIG. 19, the following steps are included.

In step 1, in the case that the first TA timer expires and uplink data comes, the UE selects a target SSB from the SSB group#0 associated with the TRP#0, and further transmits the PRACH to the TRP#0 using the PRACH resource associated with the target SSB.

In step 2, the TRP#0 transmits the RAR to the UE, wherein the RAR includes the target TA value.

Optionally, the RAR further calculates the TA value, that is, the target TA value, of the UE to the TRP#1 based on the arrival time of the PRACH.

Optionally, the RAR further includes the CORESETPoolIndex or the TAG ID associated with the target TA value, that is, the CORESETPoolIndex or TAG ID associated with the TRP#0.

Optionally, the contention-based four-step random access procedure further includes the following steps.

In step 3, the UE transmits the Msg 3 to the TRP#0.

In step 4, the TRP#0 transmits the Msg 4 to the UE.

It should be noted that in the embodiments of FIG. 19, the RAR is replied by the target network device. That is, the terminal device transmits the PRACH to a network device, the network device replies the RAR to the UE and carries the target TA value in the RAR. In the embodiments of FIG. 20, the RAR and/or the Msg4 are transmitted by the network device associated with the CSS. The TRP#1 is the TRP associated with the CSS.

As shown in FIG. 20, the following steps are included.

In step 1, in the case that the first TA timer expires and uplink data comes, the UE selects a target SSB from the SSB group#0 associated with the TRP#0, and further transmits the PRACH to the TRP#0 using the PRACH resource associated with the target SSB.

In step 2, the TRP#0 transmits the RAR to the UE, wherein the RAR includes the target TA value.

Optionally, the RAR further calculates the TA value, that is, the target TA value, of the UE to the TRP#1 based on the arrival time of the PRACH.

Optionally, the RAR further includes the CORESETPoolIndex or the TAG ID associated with the target TA value, that is, the CORESETPoolIndex or TAG ID associated with the TRP#0.

Furthermore, the TRP#0 transmits the target TA value to the TRP#1, and the TRP#1 transmits the RAR to the UE. The RAR carries the target TA value.

Optionally, the contention-based four-step random access procedure further includes the following steps.

In step 3, the UE transmits the Msg 3 to the TRP#0.

In step 4, the TRP#1 transmits the Msg 4 to the UE.

In summary, in the embodiments of the present disclosure, the plurality of reference signals are grouped, and each reference signal group is associated with a network device. As such, in the case that the TA timer corresponding to the TAG ID associated with the network device expires, the terminal device selects the target reference signal from the reference signal group associated with the network device, and further transmits the PRACH to the target network device using the PRACH resource associated with the target reference signal, such that the TA value corresponding to the target network device is acquired.

Method embodiments of the present disclosure are described in detail in conjunction with FIG. 8 to FIG. 20, and apparatus embodiments of the present disclosure are described in detail in conjunction with FIG. 21 to FIG. 28. It should be understood that the apparatus embodiments correspond to the method embodiments, and thus for similar description, reference may be made to the method embodiments.

FIG. 21 is a schematic block diagram of a terminal device 400 according to some embodiments of the present disclosure. As shown in FIG. 21, the terminal device 400 includes:

a communication unit 410, configured to receive first signaling from a first network device, wherein the first signaling is used for instructing the terminal device to initiate a random access to a target network device, and includes first indication information, wherein the first indication information indicates the target network device.

In some embodiments, the communication unit 410 is further configured to: transmit a PRACH to the target network device; and receive an RAR, wherein the RAR includes a target TA value, wherein the target TA value is a TA value of the terminal device to the target network device.

In some embodiments, the first indication information indicates a first control resource set pool index, wherein the first control resource set pool index is associated with the target network device.

In some embodiments, the first control resource set pool index is associated with a first TAG ID, wherein the first TAG ID is associated with the target network device.

In some embodiments, the first indication information indicates first spatial information, wherein the first spatial information is associated with the target network device.

In some embodiments, the first spatial information is associated with a first TAG ID, wherein the first TAG ID is associated with the target network device.

In some embodiments, the first spatial information is associated with a first control resource set pool index, wherein the first control resource set pool index is associated with the target network device.

In some embodiments, the first spatial information includes a first TCI state and/or first spatial relationship information.

In some embodiments, the first TCI state is associated with a first TAG ID, wherein the first TAG ID is associated with the target network device; and/or

the first spatial relationship information is associated with a first TAG ID, wherein the first TAG ID is associated with the target network device.

In some embodiments, the first spatial information indicates a spatial filter used by the terminal device in transmitting the PRACH.

In some embodiments, in the case that the first spatial information indicates an SSB resource index, the first spatial information further indicates the spatial filter used by the terminal device in transmitting the PRACH.

In some embodiments, the first TCI state is an uplink TCI state or a joint TCI state.

In some embodiments, the first indication information indicates a first PCI, wherein the first PCI is associated with the target network device.

In some embodiments, the first PCI is associated with a first TAG ID, wherein the first TAG ID is associated with the target network device; or the first PCI is associated with a first control resource set pool index, wherein the first control resource set pool index is associated with the target network device.

In some embodiments, the first signaling further includes: second indication information, wherein the second indication information indicates a spatial filter used by the terminal device in receiving the RAR.

In some embodiments, the second indication information indicates a second TCI state, wherein the second TCI state is a downlink TCI state or a joint TCI state.

In some embodiments, the RAR further includes a first TAG (ID or a first control resource set pool index, wherein the first TAG ID or the first control resource set pool index is associated with the target network device.

In some embodiments, the target TA value is associated with the first TAG ID.

In some embodiments, the target TA value is received from a second network device, wherein the second network device is the target network device or a network device associated with a CSS.

In some embodiments, the target network device and the first network device are a same network device, or, the target network device and the first network device are different network devices.

In some embodiments, in the case that the target network device and the first network device are different network devices,

the first network device and the target network device are both network devices in a serving cell; or, the first network device is a network device in a serving cell, and the target network device is a network device in a non-serving cell; or, the first network device is a network device in a non-serving cell, and the target network device is a network device in a non-serving cell.

In some embodiments, the first signaling is a PDCCH order.

In some embodiments, the first network device is a network device associated with a CSS.

In some embodiments, the communication unit is a communication interface, a transceiver, an input and output interface of a communication chip or a system-on-chip. The processing unit is one or more processors.

It should be understood that the terminal device 400 according to the embodiments of the present disclosure may correspond to the terminal device in the method embodiments of the present disclosure, and above and other operations and/or functions of various units of the terminal device 400 are intended to implement corresponding processes of the terminal device in the method 200 shown in FIGS. 8 to 17, which are not repeated herein for brevity.

FIG. 22 is a schematic block diagram of a network device 500 according to some embodiments of the present disclosure. As shown in FIG. 22, the network device 500 includes:

a communication unit 510, configured to transmit first signaling to a terminal device, wherein the first signaling is used for instructing the terminal device to initiate a random access to a target network device, and includes first indication information, wherein the first indication information indicates the target network device.

In some embodiments, the first indication information indicates a first control resource set pool index, wherein the first control resource set pool index is associated with the target network device.

In some embodiments, the first control resource set pool index is associated with a first TAG ID, wherein the first TAG ID is associated with the target network device.

In some embodiments, the first indication information indicates first spatial information, wherein the first spatial information is associated with the target network device.

In some embodiments, the first spatial information is associated with a first TAG ID, wherein the first TAG ID is associated with the target network device.

In some embodiments, the first spatial information is associated with a first control resource set pool index, wherein the first control resource set pool index is associated with the target network device.

In some embodiments, the first spatial information includes a first TCI state and/or first spatial relationship information.

In some embodiments, the first TCI state is associated with a first TAG ID, wherein the first TAG ID is associated with the target network device; and/or the first spatial relationship information is associated with a first TAG ID, wherein the first TAG ID is associated with the target network device.

In some embodiments, the first spatial information indicates a spatial filter used by the terminal device in transmitting the PRACH.

In some embodiments, in the case that the first spatial information indicates an SSB resource index, the first spatial information further indicates a spatial filter used by the terminal device in transmitting the PRACH.

In some embodiments, the first TCI state is an uplink TCI state or a joint TCI state.

In some embodiments, the first indication information indicates a first PCI, wherein the first PCI is associated with the target network device.

In some embodiments, the first PCI is associated with a first TAG ID, wherein the first TAG ID is associated with the target network device; or the first PCI is associated with a first control resource set pool index, wherein the first control resource set pool index is associated with the target network device.

In some embodiments, the first signaling further includes:
second indication information, wherein the second indication information indicates a spatial filter used by the terminal device in receiving the RAR.

In some embodiments, the second indication information indicates a second TCI state, wherein the second TCI state is a downlink TCI state or a joint TCI state.

In some embodiments, the communication unit 510 is further configured to transmit an RAR to the terminal device, wherein the RAR includes a target TA value

In some embodiments, the RAR further includes a first TAG ID or a first control resource set pool index, wherein the first TAG ID or the first control resource set pool index is associated with the target network device.

In some embodiments, the target TA value is associated with the first TAG ID.

In some embodiments, the first network device is a network device associated with a CSS.

In some embodiments, the target network device is the network device.

In some embodiments, the target network device and the first network device are different network devices.

In some embodiments, in the case that the target network device and the first network device are different network devices,
the first network device and the target network device are both network devices in a serving cell; or, the first network device is a network device in a serving cell, and the target network device is a network device in a non-serving cell; or, the first network device is a network device in a non-serving cell, and the target network device is a network device in a non-serving cell.

In some embodiments, the first signaling is a PDCCH order.

In some embodiments, the communication unit is a communication interface, a transceiver, an input and output interface of a communication chip or a system-on-chip. The processing unit is one or more processors.

It should be understood that the network device 500 according to the embodiments of the present disclosure may correspond to the first network device in the method embodiments of the present disclosure, and above and other operations and/or functions of various units of the network device 500 are intended to implement corresponding processes of the first network device in the method 200 shown in FIGS. 8 to 17, which are not repeated herein for brevity.

FIG. 23 is a schematic block diagram of a network device 800 according to some embodiments of the present disclosure. As shown in FIG. 23, the terminal device 800 includes: a communication unit 810, configured to transmit an RAR to a terminal device, wherein the RAR includes a target TA value, the target TA value being a response to a PRACH, wherein a receiver terminal of the PRACH is a target network device, and the terminal device is triggered by a first network device to transmit the PRACH to the target network device.

In some embodiments, the RAR further includes a first TAG ID or a first control resource set pool index, wherein the first TAG ID or the first control resource set pool index is associated with the target network device.

In some embodiments, the target TA value is associated with the first TAG ID.

In some embodiments, the second network device is the target network device or a network device associated with a CSS.

In some embodiments, the first network device is a network device associated with a CSS.

In some embodiments, the target network device and the first network device are a same network device, or, the target network device and the first network device are different network devices.

In some embodiments, in the case that the target network device and the first network device are different network devices,

the first network device and the target network device are both network devices in a serving cell; or, the first network device is a network device in a serving cell, and the target network device is a network device in a non-serving cell; or, the first network device is a network device in a non-serving cell, and the target network device is a network device in a non-serving cell.

In some embodiments, the communication unit is a communication interface, a transceiver, an input and output interface of a communication chip or a system-on-chip. The processing unit is one or more processors.

It should be understood that the network device 800 according to the embodiments of the present disclosure may correspond to the network device in the method embodiments of the present disclosure, and above and other operations and/or functions of various units of the network device 800 are intended to implement corresponding processes of the network device in the method 200 shown in FIGS. 8 to 17, which are not repeated herein for brevity.

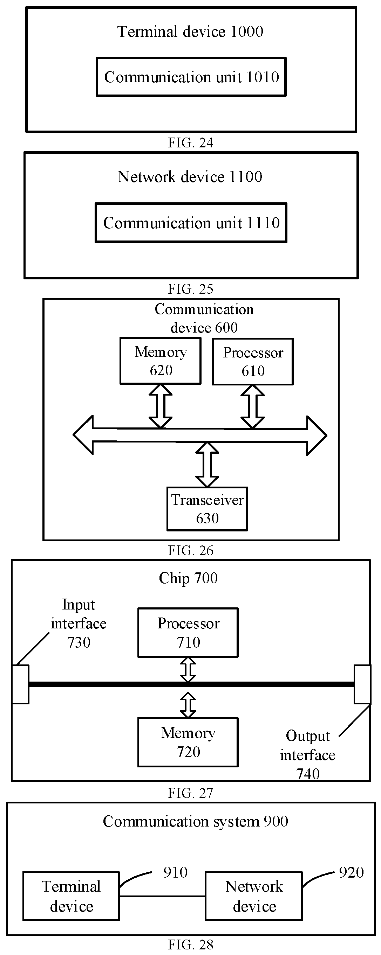

FIG. 24 is a schematic block diagram of a terminal device 1000 according to some embodiments of the present disclosure. As shown in FIG. 24, the terminal device 1000 includes:

a communication unit 1010, configured to transmit a PRACH to a target network device based on a target reference signal in the case that a first TA timer expires; wherein the first TA timer is associated with a first TAG ID, the target network device is associated with the first TAG ID, and the target reference signal is a reference signal associated with the target network device and selected by the terminal device from a plurality of candidate reference signals.

In some embodiments, the plurality of candidate reference signals are organized into a plurality of reference signal groups, wherein each of the plurality of reference signal groups is associated with a network device, and includes one or more candidate reference signals.

In some embodiments, each of the plurality of reference signal groups being associated with the network device includes a case where each of the plurality of reference signal groups is associated with a TAG ID and the TAG ID is associated with the network device.

In some embodiments, the plurality of reference signal groups are predefined or configured by the network device.

In some embodiments, the network device 1000 further includes: a processing unit, configured to select a PRACH resource associated with the target reference signal from preconfigured PRACH resources.

The communication unit 1010 is further configured to transmit the PRACH to the target network device using the PRACH resource associated with the target reference signal.

In some embodiments, the communication unit 1010 is further configured to receive an RAR from a second network device, wherein the RAR includes a target TA value.

In some embodiments, the second network device is the target network device or a network device associated with a CSS.

In some embodiments, the RAR further includes a first TAG ID or a first control resource set pool index, wherein the first TAG ID or the first control resource set pool index is associated with the target network device.

In some embodiments, the target reference signal includes an SSB.

In some embodiments, the communication unit is a communication interface, a transceiver, an input and output interface of a communication chip or a system-on-chip. The processing unit is one or more processors.

It should be understood that the terminal device 1000 according to the embodiments of the present disclosure may correspond to the terminal device in the method embodiments of the present disclosure, and above and other operations and/or functions of various units of the terminal device 1000 are intended to implement corresponding processes of the terminal device in the method 200 shown in FIGS. 18 to 20, which are not repeated herein for brevity.

FIG. 25 is a schematic block diagram of a network device 1100 according to some embodiments of the present disclosure. As shown in FIG. 25, the network device 1100 includes:

a communication unit 810, configured to transmit first configuration information to a terminal device, wherein the first configuration information is for configuring an association relationship between a plurality of reference signal groups and a plurality of network devices, wherein each of the plurality of reference signal groups includes one or more candidate reference signals, and the association relationship is for the terminal device to determine to transmit a PRACH resource used by a PRACH to a target network device.

In some embodiments, in the association relationship, each of the plurality of reference signal groups is associated with one of the plurality of network devices.

In some embodiments, each of the plurality of reference signal groups being associated with one of the plurality of network devices includes a case where:

each of the plurality of reference signal groups is associated with a TAG ID and the TAG ID is associated with the one of the plurality of network devices.

In some embodiments, the RAR further includes a first TAG ID or a first control resource set pool index, wherein the first TAG ID or the first control resource set pool index is associated with the target network device.

In some embodiments, any reference signal includes an SSB.

In some embodiments, the communication unit is a communication interface, a transceiver, an input and output interface of a communication chip or a system-on-chip. The processing unit is one or more processors.

It should be understood that the network device 1100 according to the embodiments of the present disclosure may correspond to the first network device in the method embodiments of the present disclosure, and above and other operations and/or functions of various units of the network device 1100 are intended to implement corresponding processes of the first network device in the method 200 shown in FIGS. 18 to 20, which are not repeated herein for brevity.

FIG. 26 is a schematic block diagram of a communication device 600 according to some embodiments of the present disclosure. The communication device 600 shown in FIG. 26 includes a processor 610. The processor 610 is configured to call and run one or more computer programs in a memory to perform the methods according to the embodiments of the present disclosure.

In some embodiments, as shown in FIG. 26, the communication device 600 may further include a memory 620. The processor 610 is configured to call and run one or more computer programs in the memory 620 to perform the methods according to the embodiments of the present disclosure.

The memory 620 may be a device independent of the processor 610, or may be integrated in the processor 610.

In some embodiments, as shown in FIG. 26, the communication device 600 may further include a transceiver 630. The processor 610 may control communication of the transceiver 630 with other devices. In particular, the transceiver 630 may transmit information or data to other devices, or receives information or data from other devices.

The transceiver 630 may include a transiter and a receiver. The transceiver 630 may further include one or more antennas.

In some embodiments, the communication device 600 may be the first network device or the second network device in the embodiments of the present disclosure, and may perform the corresponding processes performed by the first network device or the second network device in the methods according to the embodiments of the present disclosure, which are not described herein again for brevity.

In some embodiments, the communication device 600 may be the mobile terminal/terminal device according to the embodiments of the present disclosure, and may perform the corresponding processes performed by the mobile terminal/terminal device in the methods according to the embodiment of the present disclosure, which are not described herein again for brevity.

FIG. 27 is a schematic block diagram of a chip according to some embodiments of the present disclosure. The chip 700 shown in FIG. 27 includes a processor 710. The processor 710 is configured to call and run one or more computer programs in a memory to perform the methods according to the embodiments of the present disclosure.

In some embodiments, as shown in FIG. 27, the chip 700 may further include a memory 720. The processor 710 is configured to call and run one or more computer programs in the memory 720 to perform the methods according to the embodiments of the present disclosure.

The memory 720 may be a device independent of the processor 710, or may be integrated in the processor 710.

In some embodiments, the chip 700 may further include an input interface 730. The processor 710 may control communication of the input interface 730 with other devices. In particular, the input interface 730 may acquire information or data from other devices.

In some embodiments, the chip 700 may further include an output interface 740. The processor 710 may control communication of the output interface 740 with other devices. In particular, the output interface 740 may transmit information or data to other devices.

In some embodiments, the chip 700 is applicable to the first network device or the second network device in the embodiments of the present disclosure, and may perform the corresponding processes practiced by the first network device or the second network device in the methods according to the embodiments of the present disclosure, which is not described herein again for brevity.

In some embodiments, the chip 700 is applicable to the mobile terminal/terminal device in the embodiments of the present disclosure, and may perform the corresponding processes practiced by the mobile terminal/terminal device in the methods according to the embodiment of the present disclosure, which is not described herein again for brevity.

It should be understood that the chip in the embodiments of the present disclosure may also referred to as a system-level chip, a system chip, a chip system, a system-on-chip, or the like.

FIG. 28 is a schematic block diagram of a communication system 900 according to some embodiments of the present disclosure. As shown in FIG. 28, the communication system 900 includes a terminal device 910 and a network device 920.

The terminal device 910 is configured to implement the corresponding functions implemented by the terminal device in the above methods, and the network device 920 is configured to implement the corresponding functions practiced by the first network device and/or the second network device in the method, which are not described herein again for brevity.

It should be understood that the processor in the embodiments of the present disclosure is an integrated circuit chip with a signal processing capability. In the implementations, the processes in the method embodiments are achieved by integrated logic circuits of hardware in the processor or instructions in the software form. The processor is a general processor, a digital signal processor (DSP), an application-specific integrated circuit (ASIC), a field-programmable gate array (FPGA), any other programmable logic device, discrete gate, transistor logic device, or discrete hardware assembly that is capable of achieving or performing various methods, processes, and logic blocks according to the embodiments of the present disclosure. The general processor is a microprocessor, any conventional processor, or the like. The processes in the method according to the embodiments of the present disclosure may be directly embodied as being processed by a hardware decoding processor or being performed by a combination of hardware and software modules in the decoding processor. The software modules may be disposed in a random access memory, a flash memory, a read-only memory, a programmable read-only memory, an electrically erasable programmable memory, a register, and other storage medium mature in the field. The storage medium is disposed in the memory, and the processor reads the information in the memory and combines with its hardware to perform the processes of the method.

It should be understood that the memory in embodiments of the present disclosure may be a volatile or non-volatile memory, or include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory is a random access memory (RAM) used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). It should be noted that the system and the memory described herein are intended to include, but not limit to these and any other suitable type of memories.

It should be understood that the memory is exemplary but not for limitation. For example, the memory in the embodiments of the present disclosure may also be an SRAM, a DRAM, an SDRAM, a DDR SDRAM, an ESDRAM, an SLDRAM, a DR RAM, or the like. That is, the memory in the embodiments of the present disclosure is intend to include, but not limit to these and any other suitable type of memory.

Some embodiments of the present disclosure further provide a computer-readable storage medium for storing one or more computer programs.

In some embodiments, the computer-readable storage medium is applicable to the first network device according to the embodiments of the present disclosure, and the one or more computer programs, when loaded and run on a computer, cause the computer to perform the corresponding processes implemented by the first network device in the methods according to the embodiments of the present disclosure, which are not described herein again for brevity.

In some embodiments, the computer-readable storage medium is applicable to the second network device according to the embodiments of the present disclosure, and the one or more computer programs, when loaded and run on a computer, cause the computer to perform the corresponding processes implemented by the second network device in the methods according to the embodiments of the present disclosure, which are not described herein again for brevity.

In some embodiments, the computer-readable storage medium is applicable to the mobile terminal/terminal device in the embodiments of the present disclosure, and the one or more computer programs, when loaded and run on a computer, cause the computer to perform the corresponding processes implemented by the mobile terminal/terminal device in the methods according to the embodiments of the present disclosure, which are not described herein again for brevity.

Some embodiments of the present disclosure further provide a computer program product including one or more computer program instructions.

In some embodiments, the computer program product is applicable to the first network device in the embodiments of the present disclosure, and the one or more computer program instructions, when loaded and executed on a computer, cause the computer to perform the corresponding processes implemented by the first network device in the methods according to the embodiments of the present disclosure, which are not described herein again for brevity.

In some embodiments, the computer program product is applicable to the second network device in the embodiments of the present disclosure, and the one or more computer program instructions, when loaded and executed on a computer, cause the computer to perform the corresponding processes implemented by the second network device in the methods according to the embodiments of the present disclosure, which are not described herein again for brevity.

In some embodiments, the computer program product is applicable to the mobile terminal/terminal device in the embodiments of the present disclosure, and the one or more computer program instructions, when loaded and executed on a computer, cause the computer to perform the corresponding processes implemented by the mobile terminal/terminal device in the methods according to the embodiments of the present disclosure, which are not described herein again for brevity.

Some embodiments of the present disclosure further provide a computer program.

In some embodiments, the computer program is applicable to the first network device in the embodiments of the present disclosure, and the computer program, when loaded and run on a computer, causes the computer to perform the corresponding processes implemented by the first network device in the methods according to the embodiment of the present disclosure, which are not described herein again for brevity.

In some embodiments, the computer program is applicable to the second network device in the embodiments of the present disclosure, and the computer program, when loaded and run on a computer, causes the computer to perform the corresponding processes implemented by the second network device in the methods according to the embodiment of the present disclosure, which are not described herein again for brevity.

In some embodiments, the computer program is applicable to the mobile terminal/terminal device in the embodiments of the present disclosure, and the computer program, when loaded and run on a computer, causes the computer to perform the corresponding processes implemented by the mobile terminal/terminal device in the methods according to the embodiments of the present disclosure, which are not described herein again for brevity.

It can be understood by those of ordinary skill in the art that the units and algorithmic processes of the examples described in conjunction with the embodiments disclosed herein can be practiced by the electronic hardware, or by a combination of the computer software and the electronic hardware. Whether these functions are achieved by the hardware or the software depends on the specific application and design constraints of the technical solution. For each application, those skilled in the art may use different methods to achieve the described functions, and such implementations should not be considered beyond the scope of the present disclosure.

It can be understood by those skilled in the art that for the specific operation processes of the system, device, and unit described above, reference may be made to the corresponding processes in the embodiments of the method for convenience and simplicity of description, which are not repeated herein for convenience and brevity.

In the embodiments of the present disclosure, it should be understood that the systems, devices, and methods can be practiced in other ways. For example, the apparatus embodiments are only exemplary. For example, the division of the units is only the logical function division, and the actual implementation may have another division. For example, several units or assemblies can be combined or integrated into another system, or some features can be ignored or not performed. In addition, the coupling, the direct coupling, or the communication connection between each other may be achieved by some interfaces, and an indirect coupling or communication connection between devices or units may be electrical, mechanical or in other form.

The units described as separate parts may or may not be physically separate, and the parts shown as the units may or may not be physical units. That is, the parts may be disposed in one place, or distributed in several network units. Some or all of the units can be selected according to actual needs to achieve the purpose of the technical solutions according to the embodiments.

In addition, the functional units in the embodiments of the present disclosure may be integrated in a processing unit or exist physically separately, or two or more units may be integrated in a unit.

In the case that the functions are achieved in the form of software functional units and sold or used as stand-alone products, the functions may be stored in a computer-readable storage medium. Based on the understanding, the nature of the technical solutions of the present disclosure, the part contributed to the prior art, or the part of the technical solutions may be embodied in the form of a software product, and the software product is stored in a storage medium and includes a number of instructions to cause a computer device (which may be a personal computer, a server, a network equipment, or the like) to perform all or part of the processes of the method in various embodiments of the present disclosure. Above storage medium include: a U disk, a mobile hard disk, a ROM, a RAM, a disk, a disc, or other media that can store program codes.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

**Claims**

1. A wireless communication method, applicable to a terminal device, the method comprising:

   receiving first signaling from a first network device, wherein the first signaling is used for instructing the terminal device to initiate a random access to a target network device, and comprises first indication information, wherein the first indication information indicates the target network device;
   transmitting a physical random access channel (PRACH) to the target network device; and
   receiving a random access response (RAR), wherein the RAR comprises a target timing advance (TA) value, wherein the target TA value is a TA value of the terminal device for the target network device.

2. The method according to claim 1, wherein the first indication information indicates a first control resource set pool index, wherein the first control resource set pool index is associated with the target network device.

3. The method according to claim 2, wherein the first control resource set pool index is associated with a first timing advance group (TAG) identity (ID), wherein the first TAG ID is associated with the target network device.

4. The method according to any one of claims 1 to 3, wherein the first indication information indicates first spatial information, wherein the first spatial information is associated with the target network device.

5. The method according to claim 4, wherein the first spatial information is associated with a first timing advance group (TAG) identity (ID), wherein the first TAG ID is associated with the target network device.

6. The method according to claim 4, wherein the first spatial information is associated with a first control resource set pool index, wherein the first control resource set pool index is associated with the target network device.

7. The method according to any one of claims 4 to 6, wherein the first spatial information comprises a first transmission configuration indicator (TCI) state and/or first spatial relationship information.

8. The method according to claim 7, wherein

the first TCI state is associated with a first timing advance group (TAG) identity (ID), wherein the first TAG ID is associated with the target network device; and/or
the first spatial relationship information is associated with a first TAG ID, wherein the first TAG ID is associated with the target network device.

9. The method according to claim 7 or 8, wherein the first spatial information indicates a spatial filter used by the terminal device in transmitting the PRACH.

10. The method according to claim 9, wherein in a case where the first spatial information indicates a synchronization signal block (SSB) resource index, the first spatial information further indicates the spatial filter used by the terminal device in transmitting the PRACH.

11. The method according to any one of claims 7 to 10, wherein the first TCI state is an uplink TCI state or a joint TCI state.

12. The method according to any one of claims 1 to 11, wherein the first indication information indicates a first physical cell identifier (PCI), wherein the first PCI is associated with the target network device.

13. The method according to claim 12, wherein

the first PCI is associated with a first timing advance group (TAG) identity (ID), wherein the first TAG ID is associated with the target network device; or
the first PCI is associated with a first control resource set pool index, wherein the first control resource set pool index is associated with the target network device.

14. The method according to any one of claims 1 to 13, wherein the first signaling further comprises second indication information, wherein the second indication information indicates a spatial filter used by the terminal device in receiving the RAR.

15. The method according to claim 14, wherein the second indication information indicates a second transmission configuration indicator (TCI) state, wherein the second TCI state is a downlink TCI state or a joint TCI state.

16. The method according to any one of claims 1 to 15, wherein the RAR further comprises a first timing advance group (TAG) identity (ID) or a first control resource set pool index, wherein the first TAG ID or the first control resource set pool index is associated with the target network device.

17. The method according to claim 16, wherein the target TA value is associated with the first TAG ID.

18. The method according to any one of claims 1 to 17, wherein the target TA value is received from a second network device, wherein the second network device is the target network device or a network device associated with a common search space (CSS).

19. The method according to any one of claims 1 to 18, wherein the target network device and the first network device are a same network device, or, the target network device and the first network device are different network devices.

20. The method according to claim 19, wherein in a case where the target network device and the first network device are different network devices, the first network device and the target network device are both network devices in a serving cell; or, the first network device is a network device in a serving cell, and the target network device is a network device in a non-serving cell; or, the first network device is a network device in a non-serving cell, and the target network device is a network device in a non-serving cell.

21. The method according to any one of claims 1 to 20, wherein the first signaling is a physical downlink control channel (PDCCH) order.

22. The method according to any one of claims 1 to 21, wherein the first network device is a network device associated with a common search space (CSS).

23. A wireless communication method, applicable to a first network device, the method comprising:
transmitting first signaling to a terminal device, wherein the first signaling is used for instructing the terminal device to initiate a random access to a target network device, and comprises first indication information, wherein the first indication information indicates the target network device.

24. The method according to claim 23, wherein the first indication information indicates a first control resource set pool index, wherein the first control resource set pool index is associated with the target network device.

25. The method according to claim 24, wherein the first control resource set pool index is associated with a first timing advance group (TAG) identity (ID), wherein the first TAG ID is associated with the target network device.

26. The method according to any one of claims 23 to 25, wherein the first indication information indicates first spatial information, wherein the first spatial information is associated with the target network device.

27. The method according to claim 26, wherein the first spatial information is associated with a first timing advance group (TAG) identity (ID), wherein the first TAG ID is associated with the target network device.

28. The method according to claim 26, wherein the first spatial information is associated with a first control resource set pool index, wherein the first control resource set pool index is associated with the target network device.

29. The method according to any one of claims 26 to 28, wherein the first spatial information comprises a first transmission configuration indicator (TCI) state and/or first spatial relationship information.

30. The method according to claim 29, wherein

the first TCI state is associated with a first timing advance group (TAG) identity (ID), wherein the first TAG ID is associated with the target network device; and/or
the first spatial relationship information is associated with a first TAG ID, wherein the first TAG ID is associated with the target network device.

31. The method according to claim 29 or 30, wherein the first spatial information indicates a spatial filter used by the terminal device in transmitting a physical random access channel (PRACH).

32. The method according to claim 31, wherein in a case where the first spatial information indicates a synchronization signal block (SSB) resource index, the first spatial information further indicates the spatial filter used by the terminal device in transmitting the PRACH.

33. The method according to any one of claims 29 to 32, wherein the first TCI state is an uplink TCI state or a joint TCI state.

34. The method according to any one of claims 23 to 33, wherein the first indication information indicates a first physical cell identifier (PCI), wherein the first PCI is associated with the target network device.

35. The method according to claim 34, wherein

the first PCI is associated with a first timing advance group (TAG) identity (ID), wherein the first TAG ID is associated with the target network device; or
the first PCI is associated with a first control resource set pool index, wherein the first control resource set pool index is associated with the target network device.

36. The method according to any one of claims 23 to 35, wherein the first signaling further comprises second indication information, wherein the second indication information indicates a spatial filter used by the terminal device in receiving a random access response (RAR).

37. The method according to claim 36, wherein the second indication information indicates a second transmission configuration indicator (TCI) state, wherein the second TCI state is a downlink TCI state or a joint TCI state.

38. The method according to any one of claims 23 to 37, further comprising:
transmitting a random access response (RAR) to the terminal device, wherein the RAR comprises a target timing advance (TA) value

39. The method according to claim 38, wherein the RAR further comprises a first timing advance group (TAG) identity (ID) or a first control resource set pool index, wherein the first TAG ID or the first control resource set pool index is associated with the target network device.

40. The method according to claim 38 or 39, wherein the target TA value is associated with the first TAG ID.

41. The method according to any one of claims 23 to 40, wherein the first network device is a network device associated with a common search space (CSS).

42. The method according to any one of claims 23 to 41, wherein the target network device is the first network device.

43. The method according to any one of claims 23 to 41, wherein the target network device and the first network device are different network devices.

44. The method according to claim 43, wherein in a case where the target network device and the first network device are different network devices, the first network device and the target network device are both network devices in a serving cell; or, the first network device is a network device in a serving cell, and the target network device is a network device in a non-serving cell; or, the first network device is a network device in a non-serving cell, and the target network device is a network device in a non-serving cell.

45. The method according to any one of claims 23 to 44, wherein the first signaling is a physical downlink control channel (PDCCH) order.

46. A wireless communication method, applicable to a terminal device, the method comprising:
transmitting a random access response (RAR) to a terminal device, wherein the RAR comprises a target timing advance (TA) value, the target TA value being a response to a physical random access channel (PRACH), wherein a receiver terminal of the PRACH is a target network device, and the terminal device is triggered by a first network device to transmit the PRACH to the target network device.

47. The method according to claim 46, wherein the RAR further comprises a first timing advance group (TAG) identity (ID) or a first control resource set pool index, wherein the first TAG ID or the first control resource set pool index is associated with the target network device.

48. The method according to claim 47, wherein the target TA value is associated with the first TAG ID.

49. The method according to any one of claims 46 to 48, wherein the second network device is the target network device or a network device associated with a common search space (CSS).

50. The method according to any one of claims 46 to 49, wherein the first network device is a network device associated with a common search space (CSS).

51. The method according to any one of claims 46 to 50, wherein the target network device and the first network device are a same network device, or, the target network device and the first network device are different network devices.

52. The method according to claim 51, wherein in a case where the target network device and the first network device are different network devices, the first network device and the target network device are both network devices in a serving cell; or, the first network device is a network device in a serving cell, and the target network device is a network device in a non-serving cell; or, the first network device is a network device in a non-serving cell, and the target network device is a network device in a non-serving cell.

53. A wireless communication method, applicable to a terminal device, the method comprising:
transmitting a physical random access channel (PRACH) to a target network device based on a target reference signal in a case where a first timing advance (TA) timer expires, wherein the first TA timer is associated with a first timing advance group (TAG) identity (ID), the target network device is associated with the first TAG ID, and the target reference signal is a reference signal associated with the target network device and selected by the terminal device from a plurality of candidate reference signals.

54. The method according to claim 53, wherein the plurality of candidate reference signals are organized into a plurality of reference signal groups, wherein each of the plurality of reference signal groups is associated with a network device, and comprises one or more candidate reference signals.

55. The method according to claim 54, wherein each of the plurality of reference signal groups being associated with the network device comprises a case that each of the plurality of reference signal groups is associated with a TAG ID and the TAG ID is associated with the network device.

56. The method according to claim 54 or 55, wherein the plurality of reference signal groups are predefined or configured by the network device.

57. The method according to any one of claims 53 to 56, wherein transmitting the PRACH to the target network device based on the target reference signal comprises:

selecting a PRACH resource associated with the target reference signal from preconfigured PRACH resources, and transmitting the PRACH to the target network device using the PRACH resource associated with the target reference signal.

58. The method according to any one of claims 53 to 57, further comprising:
receiving a random access response (RAR) from a second network device, wherein the RAR comprises a target timing advance (TA) value.

59. The method according to claim 58, wherein the second network device is the target network device or a network device associated with a common search space (CSS).

60. The method according to claim 58 or 59, wherein the RAR further comprises a first timing advance group (TAG) identity (ID) or a first control resource set pool index, wherein the first TAG ID or the first control resource set pool index is associated with the target network device.

61. The method according to any one of claims 53 to 60, wherein the target reference signal comprises a synchronization signal block (SSB).

62. A wireless communication method, applicable to a first network device, the method comprising:
transmitting first configuration information to a terminal device, wherein the first configuration information is for configuring an association relationship between a plurality of reference signal groups and a plurality of network devices, wherein each of the plurality of reference signal groups comprises one or more candidate reference signals, and the association relationship is for the terminal device to determine to transmit a PRACH resource used by a physical random access channel (PRACH) to a target network device.

63. The method according to claim 53, wherein in the association relation, each of the plurality of reference signal groups is associated with one of the plurality of network devices.

64. The method according to claim 63, wherein each of the plurality of reference signal groups being associated with one of the plurality of network devices comprises a case where each of the plurality of reference signal groups is associated with a TAG ID and the TAG ID is associated with the one of the plurality of network devices.

65. The method according to any one of claims 62 to 54, further comprising:
transmitting a random access response (RAR) to the terminal device, wherein the RAR comprises a target timing advance (TA) value.

66. The method according to claim 65, wherein the RAR further comprises a first timing advance group (TAG) identity (ID) or a first control resource set pool index, wherein the first TAG ID or the first control resource set pool index is associated with the target network device, and the target network device is a network device to which the terminal device initiates a random access.

67. The method according to any one of claims 62 to 66, wherein any reference signal comprises a synchronization signal block (SSB).

68. A terminal device, comprising: a communication unit, configured to:

receive first signaling from a first network device, wherein the first signaling is used for instructing the terminal device to initiate a random access to a target network device, and comprises first indication information, wherein the first indication information indicates the target network device;
transmit a physical random access channel (PRACH) to the target network device; and
receive a random access response (RAR), wherein the RAR comprises a target timing advance (TA) value, wherein the target TA value is a TA value of the terminal device to the target network device.

69. A network device, comprising:
a communication unit, configured to transmit first signaling to a terminal device, wherein the first signaling is used for instructing the terminal device to initiate a random access to a target network device, and comprises first indication information, wherein the first indication information indicates the target network device.

70. A network device, comprising:
a communication unit, configured to transmit a random access response (RAR) to a terminal device, wherein the RAR comprises a target timing advance (TA) value, the target TA value being a response to a physical random access channel (PRACH), wherein a receiver terminal of the PRACH is a target network device, and the terminal device is triggered by a first network device to transmit the PRACH to the target network device.

71. A terminal device, comprising:

a communication unit, configured to transmit a physical random access channel (PRACH) to a target network device based on a target reference signal in a case where a first timing advance (TA) timer expires, wherein the first TA timer is associated with a first timing advance group (TAG) identity (ID), the target network device is associated with the first TAG ID, and the target reference signal is a reference signal associated with the target network device and selected by the terminal device from a plurality of candidate reference signals..

72. A network device, comprising:
a communication unit, configured to transmit first configuration information to a terminal device, wherein the first configuration information is for configuring an association relationship between a plurality of reference signal groups and a plurality of network devices, wherein each of the plurality of reference signal groups comprises one or more candidate reference signals, and the association relationship is for the terminal device to determine to transmit a PRACH resource used by a physical random access channel (PRACH) to a target network device.

73. A terminal device, comprising: a processor and a memory, wherein the memory is configured to store one or more computer programs, and the processor is configured to call and run the one or more computer programs in the memory to perform the method as defined in any one of claims 1 to 22 or the method as defined in any one of claims 53 to 61.

74. A network device, comprising: a processor and a memory, wherein the memory is configured to store one or more computer programs, and the processor is configured to call and run the one or more computer programs in the memory to perform the method as defined in any one of claims 23 to 45, the method as defined in any one of claims 46 to 52, or the method as defined in any one of claims 62 to 67.

75. A chip, comprising: a processor, wherein the processor is configured to call and run one or more computer programs in a memory to cause a device equipped with the chip to perform the method as defined in any one of claims 1 to 22, the method as defined in any one of claims 23 to 45, the method as defined in any one of claims 46 to 52, the method as defined in any one of claims 53 to 61, or the method as defined in any one of claims 62 to 67.

76. A computer-readable storage medium, storing: one or more computer programs, wherein the one or more computer programs, when loaded and run on a computer, cause the computer to perform the method as defined in any one of claims 1 to 22, the method as defined in any one of claims 23 to 45, the method as defined in any one of claims 46 to 52, the method as defined in any one of claims 53 to 61, or the method as defined in any one of claims 62 to 67.

77. A computer program product, comprising: one or more computer program instructions, wherein the one or more computer program instructions, when loaded and executed on a computer, cause the computer to perform the method as defined in any one of claims 1 to 22, the method as defined in any one of claims 23 to 45, the method as defined in any one of claims 46 to 52, the method as defined in any one of claims 53 to 61, or the method as defined in any one of claims 62 to 67.

78. A computer program, wherein the computer program, when loaded and run on a computer, causes the computer to perform the method as defined in any one of claims 1 to 22, the method as defined in any one of claims 23 to 45, the method as defined in any one of claims 46 to 52, the method as defined in any one of claims 53 to 61, or the method as defined in any one of claims 62 to 67.

**Drawings**

100

FIG. 1

| TAG ID | Timing Advance Command | Oct 1 |
|---|---|---|

FIG. 2

| R | R | R | R | Timing Advance Command | Oct 1 |
|---|---|---|---|---|---|
| Timing Advance Command | | | | | Oct 2 |

FIG. 3

| R | Timing Advance Command | | Oct 1 |
|---|---|---|---|
| Timing Advance Command | | UL Grant | Oct 2 |
| UL Grant | | | Oct 3 |
| UL Grant | | | Oct 4 |
| UL Grant | | | Oct 5 |
| Temporary C-RNTI | | | Oct 6 |
| Temporary C-RNTI | | | Oct 7 |

FIG. 4

| Downlink frame *i* |
|---|

| Uplink frame *i* |
|---|

$$(N_{TA} + N_{TA,offset}) * T_C$$

FIG. 5

CORESETPoolIndex 0

CORESETPoolIndex 1

PDCCH 1
PDSCH 1
PUSCH 1

PDCCH 2
PDSCH 2
PUSCH 2

TRP0

UE

TRP1

FIG. 6

| Terminal device | | Network device |
|---|---|---|

Step 1: Msg 1

Step 2: Msg 2

Step 3: Msg 3

Step 4: Msg 4

FIG. 7

| Terminal device | | First network device |
| --- | --- | --- |

S210, first signaling, wherein the first signaling includes first indication information, and is used for instructing a target network device

S220, transmitting a PRACH to the target network device

S230, receiving a target TA value

FIG. 8

TRP #1

For CBRA based only

TRP #0

PDCCH order with CORESETPoolIndex

PRACH

RA with TA and associated CORESETPool Index or TAG ID

Msg 3

Msg 4

UE

Time

FIG. 9

For CBRA based only

TRP #1

PRACH

TRP #0

RA with TA and associated CORESETPool Index or TAG ID

Msg 3

Msg 4

PDCCH order with CORESETPoolIndex

UE

Time

FIG. 10

TRP #1

For CBRA based only

PRACH

TRP #0

RA with TA
and associated
CORESETPool
Index or TAG
ID

Msg 3

Msg 4

PDCCH order with
CORESETPoolIndex

UE

Time

FIG. 11

TRP #1

For CBRA based only

TRP #0

PDCCH order
with spatial
information

PRACH based
on indicated
spatial
information

RAR received
with indicated TCI
state

Msg 3

Msg 4

UE

Time

FIG. 12

For CBRA based only

TRP #1

TRP #0

PRACH based
on indicated
spatial
information

RAR received
with indicated
TCI state

Msg 3

PDCCH order
with spatial
information

Msg 4

UE

Time

FIG. 13

For CBRA based only

TRP #1

TRP #0

PRACH based
on indicated
spatial
information

RAR received
with indicated
TCI state

Msg 3

Msg 4

PDCCH order
with spatial
information

Time

UE

FIG. 14

PCI #X

For CBRA based only

PCI#D

PCI #0

PRACH

RAR with TA and
associated TAG ID

Msg 3

Msg 4

PDCCH order with
PCI

Time

UE

FIG. 15

FIG. 16

FIG. 17

300

Terminal device

First network device

S301, first configuration information, wherein the first configuration information is used for configuring a plurality of reference signal groups

S310, transmitting, by a terminal device, a PRACH to a target network device based on a target reference signal in the case that a first TA timer expires

FIG. 18

TRP #1

Group#1

For CBRA based only

TRP #0

PRACH with RO and preamble associated with selected SSB

Group#0 with selected SSB

RAR including the corresponding TAG ID and TA value

Msg 3

Msg 4

UE

TA timer expires and UL data comes

Time

FIG. 19

TRP #1

Group#1

TRP #0

Group#0 with
selected SSB

PRACH with RO
and preamble
associated with
selected SSB

RAR including the
corresponding
TAG ID and TA
value

For CBRA based only

Msg 3

Msg 4

Time

UE

TA timer expires and UL
data comes

FIG. 20

Terminal device 400

Communication unit 410

FIG. 21

Network device 500

Communication unit 510

FIG. 22

Network device 800

Communication unit 810

FIG. 23

Terminal device 1000

Communication unit 1010

FIG. 24

Network device 1100

Communication unit 1110

FIG. 25

Communication
device 600

Memory
620

Processor
610

Transceiver
630

FIG. 26

Chip 700

Input
interface
730

Processor
710

Memory
720

Output
interface
740

FIG. 27

Communication system 900

Terminal
device

910

Network
device

920

FIG. 28

## INTERNATIONAL SEARCH REPORT

| International application No. |
| --- |
| **PCT/CN2022/132346** |

| A. | CLASSIFICATION OF SUBJECT MATTER |
| --- | --- |

H04L 27/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L, H04W, H04Q, H04B, H04M

Documentation searched other than minimum documentation to the extent that such documents are included in the fields searched

Electronic data base consulted during the international search (name of data base and, where practicable, search terms used)

CNTXT, CNKI, 3GPP, WPABSC, ENTXTC: 随机接入, 物理随机接入信道, 定时提前, 终端, 网络, random, access, PRACH, timing advance, TA, terminal, network

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113519201 A (GUANGDONG OPPO MOBILE TELECOMMUNICATIONS CORP., LTD.) 19 October 2021 (2021-10-19) description, paragraphs 2-80, and figures 1-17 | 23, 42, 45, 69, 74-78 |
| A | CN 114868433 A (GUANGDONG OPPO MOBILE TELECOMMUNICATIONS CORP., LTD.) 05 August 2022 (2022-08-05) entire document | 1-78 |
| A | CN 110832942 A (HUAWEI TECHNOLOGIES CO., LTD.) 21 February 2020 (2020-02-21) entire document | 1-78 |
| A | WO 2021077343 A1 (GUANGDONG OPPO MOBILE TELECOMMUNICATIONS CORP., LTD.) 29 April 2021 (2021-04-29) entire document | 1-78 |
| A | WO 2022028455 A1 (VIVO MOBILE COMMUNICATION CO., LTD.) 10 February 2022 (2022-02-10) entire document | 1-78 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 June 2023** | **03 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/132346**

| Patent document cited in search report | | | Publication date (day/month/year) | Patent family member(s) | | | Publication date (day/month/year) |
|---|---|---|---|---|---|---|---|
| CN | 113519201 | A | 19 October 2021 | US | 2022007426 | A1 | 06 January 2022 |
| | | | | WO | 2020186546 | A1 | 24 September 2020 |
| | | | | EP | 3930414 | A1 | 29 December 2021 |
| | | | | EP | 3930414 | A4 | 11 May 2022 |
| CN | 114868433 | A | 05 August 2022 | | None | | |
| CN | 110832942 | A | 21 February 2020 | EP | 3627950 | A1 | 25 March 2020 |
| | | | | EP | 3627950 | A4 | 20 May 2020 |
| | | | | EP | 3627950 | B1 | 02 June 2021 |
| | | | | WO | 2019006807 | A1 | 10 January 2019 |
| | | | | US | 2020374921 | A1 | 26 November 2020 |
| | | | | US | 11395331 | B2 | 19 July 2022 |
| WO | 2021077343 | A1 | 29 April 2021 | | None | | |
| WO | 2022028455 | A1 | 10 February 2022 | | None | | |

Form PCT/ISA/210 (patent family annex) (July 2022)